# EUROPEAN PATENT APPLICATION

(11) **EP 4 793 649 A1**
(43) Date of publication of application: **19.08.2026**
(21) Application number: 26157805.8
(22) Date of filing: 11.02.2026
(51) Int. Cl.: G01N 35/02, G01N 35/04, G01N 35/10

(54) **AUTOMATED ANALYZER AND ADJUSTMENT METHOD**

(30) Priority: 18.02.2025 JP 2025024583
(71) Applicant: Jeol Ltd., Akishima, Tokyo 196-8558 (JP)
(72) Inventor: MORIYA, Toshiki, Tokyo, 196-8558 (JP); YAITA, Tsuyoshi, Tokyo, 196-8558 (JP)
(74) Representative: Boult Wade Tennant LLP

(57) **Abstract**

In an automated analyzer (100), a dispensing mechanism (8) includes: a probe (80); a drive mechanism (84) that moves the probe (80) in a horizontal direction; a first sensor (86) that detects a contact of the probe (80) with a liquid surface; and a second sensor (88) that detects a collision of the probe (80), the probe (80) dispenses or sucks liquid to or from a container (26) disposed at a first position (P) when the probe (80) has stopped at a second position (J), and the control unit (40) performs: processing of disposing a target container (26) containing a liquid for detection at the first position (P); processing of performing a first scan of repeating processing of moving the probe (8) in a horizontal direction to change a stop position of the probe (8) and processing of acquiring a detection result of the first sensor (86) and a detection result of the second sensor (88) at the changed stop position; and processing of correcting the second position (J) based on a result of the first scan.

## Description

### BACKGROUND OF THE INVENTION

### Field of the Invention

The present invention relates to an automated analyzer and an adjustment method.

### Description of Related Art

An automated analyzer can perform qualitative analysis and quantitative analysis of a biological specimen such as blood or urine. An automated analyzer is equipped with dispensing probes such as a specimen dispensing probe that dispenses a specimen to a specimen container, a diluted specimen dispensing probe that dispenses a diluted specimen to a reaction container, and a reagent dispensing probe that dispenses a reagent to a reaction container.

In an automated analyzer, it is necessary to adjust the positions of such probes. For example, JP 2001-91522 A discloses an automated analyzer which uses a means for detecting the collision between a dispensing probe and a foreign substance to adjust a stop position of the dispensing probe such that the dispensing probe stops at the center of the opening of a target container.

However, in the automated analyzer, since a plurality of containers are arranged at equal intervals, it is impossible to determine whether the stop position of the dispensing probe can be adjusted with respect to the target container.

### SUMMARY OF THE INVENTION

According to the first aspect of the present disclosure, there is provided an automated analyzer including:
a turntable on which a plurality of containers are arranged;
a dispensing mechanism that dispenses or sucks liquid to or from one of the containers disposed at a first position on the turntable; and
a control unit that controls the dispensing mechanism,
wherein the dispensing mechanism includes:
   a probe;
   a drive mechanism that moves the probe in a horizontal direction;
   a first sensor that detects a contact of the probe with a liquid surface; and
   a second sensor that detects a collision of the probe,
   wherein the probe dispenses or sucks liquid to or from one of the containers disposed at the first position when the probe has stopped at a second position, and
   wherein the control unit performs:
      processing of disposing a target container among the containers containing a liquid for detection at the first position;
      processing of performing a first scan of repeating processing of moving the probe in a horizontal direction to change a stop position of the probe and processing of acquiring a detection result of the first sensor and a detection result of the second sensor at the changed stop position; and
      processing of correcting the second position based on a result of the first scan.

According to the second aspect of the present disclosure, there is provided a method of adjusting a stop position of a probe in an automated analyzer including:
a turntable on which a plurality of containers are arranged; and
a dispensing mechanism that dispenses or sucks liquid to or from one of the containers disposed at a first position on the turntable,
the dispensing mechanism including:
   the probe;
   a drive mechanism that moves the probe in a horizontal direction;
   a first sensor that detects a contact of the probe with a liquid surface; and
   a second sensor that detects a collision of the probe,
   the probe dispensing or sucking liquid to or from one of the containers disposed at the first position when the probe has stopped at a second position,
   the method including:
      disposing a target container among the containers containing a liquid for detection at the first position;
      performing a first scan of repeating a process of moving the probe in a horizontal direction to change a stop position of the probe, and a process of acquiring a detection result of the first sensor and a detection result of the second sensor at the changed stop position; and
      correcting the second position based on a result of the first scan.

### BRIEF DESCRIPTION OF THE DRAWINGS

FIG. 1 is a diagram illustrating an example of a configuration of an automated analyzer according to the first embodiment.
FIG. 2 is a diagram illustrating an example of a configuration of a diluted specimen dispensing mechanism.
FIG. 3 is a diagram for describing the operation of the diluted specimen dispensing mechanism.
FIG. 4 is a flowchart illustrating an example of dispensing position adjustment processing.
FIG. 5 is a flowchart illustrating an example of a first phase of probe seek processing.
FIG. 6 is a diagram for describing detection results of a first sensor and a second sensor.
FIG. 7 is a diagram illustrating detection results of the first sensor and the second sensor.
FIG. 8 is a flowchart illustrating an example of a second phase of the probe seek processing.
FIG. 9 is a diagram illustrating detection results of the first sensor and the second sensor.
FIG. 10 is a flowchart illustrating a modified example of the probe seek processing.
FIG. 11 is a diagram for describing the operation of the diluted specimen dispensing mechanism.
FIG. 12 is a flowchart illustrating an example of probe seek processing.
FIG. 13 is a flowchart illustrating an example of a first phase of probe seek processing.
FIG. 14 is a diagram illustrating an example of detection results of the first sensor and the second sensor.
FIG. 15 is a flowchart illustrating an example of detection processing at the second phase of the probe seek processing.
FIG. 16 is a flowchart illustrating a modified example of the probe seek processing.
FIG. 17 is a diagram illustrating an example of a configuration of an automated analyzer according to the third embodiment.
FIG. 18 is a diagram for describing an example of a configuration of a diluted specimen dispensing mechanism.
FIG. 19 is a diagram for describing an example of a configuration of a first reagent dispensing mechanism.
FIG. 20 is a diagram for describing an adjustment operation for a first diluted specimen probe and an adjustment operation of a second diluted specimen probe.
FIG. 21 is a flowchart illustrating an example of adjustment processing for the first diluted specimen probe and the second diluted specimen probe.
FIG. 22 is a diagram for describing the operation of the diluted specimen dispensing mechanism 8.
FIG. 23 is a flowchart illustrating a first modified example of the adjustment processing for the first diluted specimen probe and the second diluted specimen probe.
FIG. 24 is a flowchart illustrating a second modified example of the adjustment processing for the first diluted specimen probe and the second diluted specimen probe.
FIG. 25 is a flowchart illustrating a third modified example of the adjustment processing for the first diluted specimen probe and the second diluted specimen probe.
FIG. 26 is a diagram for describing an adjustment operation for a first reagent probe and an adjustment operation for a second reagent probe.
FIG. 27 is a flowchart illustrating an example of adjustment processing for the first reagent probe and the second reagent probe.
FIG. 28 is a diagram for describing the operation of the first reagent dispensing mechanism.
FIG. 29 is a flowchart illustrating a modified example of the adjustment processing for the first reagent probe and the second reagent probe.

### DESCRIPTION OF THE INVENTION

According to an embodiment of the present disclosure, there is provided an automated analyzer including:
a turntable on which a plurality of containers are arranged;
a dispensing mechanism that dispenses or sucks liquid to or from one of the containers disposed at a first position on the turntable; and
a control unit that controls the dispensing mechanism,
wherein the dispensing mechanism includes:
   a probe;
   a drive mechanism that moves the probe in a horizontal direction;
   a first sensor that detects a contact of the probe with a liquid surface; and
   a second sensor that detects a collision of the probe,
   wherein the probe dispenses or sucks liquid to or from one of the containers disposed at the first position when the probe has stopped at a second position, and
   wherein the control unit performs:
      processing of disposing a target container among the containers containing a liquid for detection at the first position;
      processing of performing a first scan of repeating processing of moving the probe in a horizontal direction to change a stop position of the probe and processing of acquiring a detection result of the first sensor and a detection result of the second sensor at the changed stop position; and
      processing of correcting the second position based on a result of the first scan.

In such an automated analyzer, a container containing liquid for detection can be identified from detection results of a first sensor and a second sensor. Therefore, in such an automated analyzer, even if a plurality of containers are arranged at equal intervals, a stop position (second position) of a probe with respect to a target container containing the liquid for detection can be reliably adjusted.

According to an embodiment of the present disclosure, there is provided a method of adjusting a stop position of a probe in an automated analyzer including:
a turntable on which a plurality of containers are arranged; and
a dispensing mechanism that dispenses or sucks liquid to or from one of the containers disposed at a first position on the turntable,
the dispensing mechanism including:
   the probe;
   a drive mechanism that moves the probe in a horizontal direction;
   a first sensor that detects a contact of the probe with a liquid surface; and
   a second sensor that detects a collision of the probe,
   the probe dispensing or sucking liquid to or from one of the containers disposed at the first position when the probe has stopped at a second position,
   the method including:
      disposing a target container among the containers containing a liquid for detection at the first position;
      performing a first scan of repeating a process of moving the probe in a horizontal direction to change a stop position of the probe, and a process of acquiring a detection result of the first sensor and a detection result of the second sensor at the changed stop position; and
      correcting the second position based on a result of the first scan.

In such an adjustment method, a container containing liquid for detection can be identified from detection results of the first sensor and the second sensor. Therefore, in such an adjustment method, even if a plurality of containers are arranged at equal intervals, the stop position (second position) of a probe with respect to a target container containing the liquid for detection can be reliably adjusted.

Preferred embodiments of the invention will be described in detail below with reference to the drawings. It is noted that the following embodiments do not unduly limit the contents of the invention described in the claims. In addition, all of the components described below are not necessarily essential requirements of the invention.

### 1. First Embodiment

### 1.1. Configuration of Automated analyzer

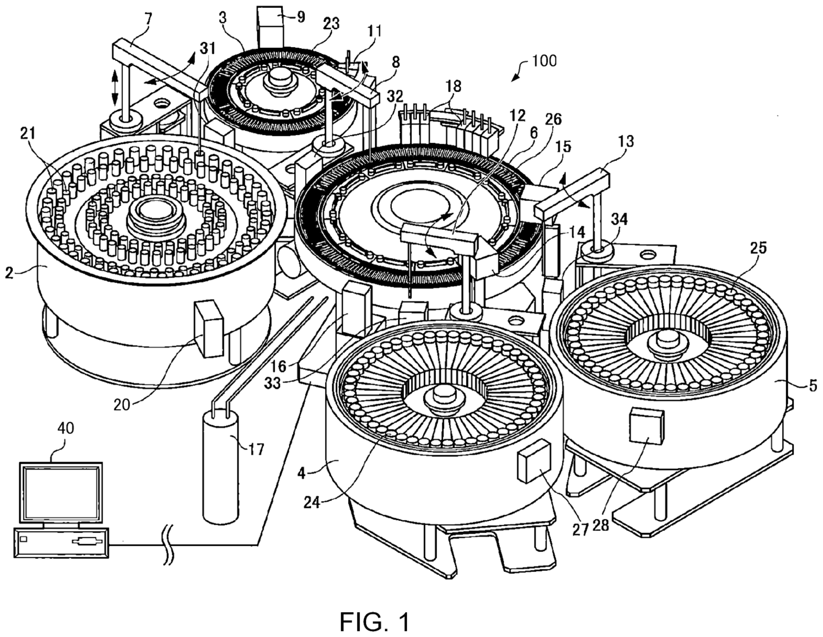

First, an automated analyzer according to a first embodiment will be described with reference to the drawings. FIG. 1 is a diagram illustrating an example of a configuration of an automated analyzer 100 according to the first embodiment.

For example, the automated analyzer 100 is a biochemical analyzer for automatically measuring the amount of a specific component contained in a specimen obtained from a living body, such as blood or urine. Note that the automated analyzer 100 may be configured to be able to measure not only biochemical items but also a wide range of subjects such as immune serum and tumor markers.

As illustrated in FIG. 1, the automated analyzer 100 includes a specimen turntable 2, a dilution turntable 3, a first reagent turntable 4, a second reagent turntable 5, a reaction turntable 6, an original specimen dispensing mechanism 7, a diluted specimen dispensing mechanism 8, a dilution stirring mechanism 9, a dilution container cleaning mechanism 11, a first reagent dispensing mechanism 12, a second reagent dispensing mechanism 13, a first reaction solution stirring mechanism 14, a second reaction solution stirring mechanism 15, a multi-wavelength photometer 16, a thermostatic chamber 17, a reaction container cleaning mechanism 18, and a control unit 40.

The specimen turntable 2, the dilution turntable 3, the first reagent turntable 4, the second reagent turntable 5, and the reaction turntable 6 are rotatably supported in the circumferential direction by a driving mechanism (not shown) and rotate at a predetermined speed in a predetermined angular range in the circumferential direction.

The specimen turntable 2 holds a plurality of specimen containers 21 containing specimens (original specimens). The specimen containers 21 contain specimens such as blood and urine. A reading part 20 for reading identification information of a specimen is disposed on the specimen turntable 2. The reading part 20 reads a specimen ID (identification information) from a bar code affixed to the side surface of a specimen container 21 contained in the specimen turntable 2. The identification information read by the reading part 20 is sent to the control unit 40. Accordingly, the control unit 40 can manage the specimens contained in the specimen containers 21.

The dilution turntable 3 holds a plurality of dilution containers 23. The plurality of dilution containers 23 are arranged in the circumferential direction on the dilution turntable 3. The plurality of dilution containers 23 are disposed at equal intervals. The dilution containers 23 contain diluted original specimens, that is, diluted specimens, sucked from the specimen containers 21 disposed on the specimen turntable 2.

The first reagent turntable 4 holds a plurality of first reagent containers 24. The plurality of first reagent containers 24 are arranged in the circumferential direction on the first reagent turntable 4. The plurality of first reagent containers 24 are disposed at equal intervals. The second reagent turntable 5 holds a plurality of second reagent containers 25. The plurality of second reagent containers 25 are arranged in the circumferential direction on the second reagent turntable 5. The plurality of second reagent containers 25 are disposed at equal intervals.

A first reagent is stored in the first reagent containers 24, and a second reagent is stored in the second reagent containers 25. When the first and second reagent containers 24 and 25 are not distinguished from each other, they may be simply referred to as "reagent containers."

The first reagent turntable 4 is provided with a first reagent bar code reader 27 for reading bar codes affixed to the side surfaces of the first reagent containers 24. The second reagent turntable 5 is provided with a second reagent bar code reader 28 for reading bar codes affixed to the side surface of the second reagent containers 25. Since the position of each reagent container can be identified by the first and second reagent bar code readers 27 and 28, each reagent container can be placed at an arbitrary position.

The reaction turntable 6 holds a plurality of reaction containers 26. The plurality of reaction containers 26 are arranged in the circumferential direction on the reaction turntable 6. The plurality of reaction containers 26 are arranged at equal intervals. A diluted specimen sampled from the dilution containers 23 of the dilution turntable 3, a first reagent sampled from the first reagent containers 24 of the first reagent turntable 4, and a second reagent sampled from the second reagent containers 25 of the second reagent turntable 5 are dispensed to the reaction containers 26. In the reaction containers 26, the diluted specimen, the first reagent, and the second reagent are stirred and reaction takes place.

The original specimen dispensing mechanism 7 dispenses a specimen and a diluent to the dilution containers 23. The original specimen dispensing mechanism 7 sucks a predetermined amount of a specimen from the specimen containers 21, and dispenses the sucked specimen and a predetermined amount of diluent (e.g., saline) supplied from the original specimen dispensing mechanism 7 to the dilution containers 23. Accordingly, the specimen is diluted to a predetermined multiple of concentration inside the dilution containers 23 and a diluted specimen is produced. The probes of the original specimen dispensing mechanism 7 are cleaned by the original specimen probe cleaning mechanism 31.

The diluted specimen dispensing mechanism 8 sucks the diluted specimen from the dilution containers 23 and dispenses the same to the reaction containers 26. The diluted specimen dispensing mechanism 8 sucks a predetermined amount of the diluted specimen from the dilution containers 23 held on the dilution turntable 3, and dispenses the sucked diluted specimen to the reaction containers 26 held on the reaction turntable 6. The probes of the diluted specimen dispensing mechanism 8 are cleaned by the diluted specimen probe cleaning mechanism 32.

The dilution stirring mechanism 9 inserts a stirring bar (not shown) into the dilution containers 23 to stir the specimen and the diluent.

The dilution container cleaning mechanism 11 has a suction nozzle for sucking a diluted specimen or detergent from the dilution containers 23, and a discharge nozzle for supplying the detergent to the dilution containers 23. The dilution container cleaning mechanism 11 cleans the dilution containers 23 by repeating the supply of the detergent and the suction of the detergent using the suction nozzle and the discharge nozzle. The dilution containers 23 can be repeatedly used by cleaning the dilution containers 23.

The first reagent dispensing mechanism 12 sucks a predetermined amount of the first reagent from the first reagent containers 24, and dispenses the sucked first reagent to the reaction containers 26. The probes of the first reagent dispensing mechanism 12 are cleaned by the reagent probe cleaning mechanism 33.

The second reagent dispensing mechanism 13 sucks a predetermined amount of the second reagent from the second reagent containers 25, and dispenses the sucked second reagent to the reaction containers 26. The probes of the second reagent dispensing mechanism 13 are cleaned by the reagent probe cleaning mechanism 34.

The first reaction solution stirring mechanism 14 inserts a stirring bar (not shown) into the reaction containers 26 to stir the diluted specimen and the first reagent. The second reaction solution stirring mechanism 15 inserts a stirring bar (not shown) into the reaction containers 26 to stir a mixed liquid of the diluted specimen, the first reagent, and the second reagent.

The reaction container cleaning mechanism 18 cleans the interior of the reaction containers 26 after analysis. The reaction container cleaning mechanism 18 has a suction nozzle for sucking the mixed liquid or detergent from the reaction containers 26, and a discharge nozzle for supplying the detergent to the reaction containers 26. The reaction container cleaning mechanism 18 cleans the reaction containers 26 by repeating the supply of the detergent and the suction of the detergent using the suction nozzle and the discharge nozzle. By cleaning the reaction containers 26, the reaction containers 26 can be used repeatedly.

The multi-wavelength photometer 16 performs optical measurements (colorimetric measurements) of the diluted specimen reacted with the first and second reagents using a light source lamp for irradiating the reaction containers 26 with a light beam. The multi-wavelength photometer 16 outputs the amounts of various components in the specimen as absorbance and detects the reaction state of the diluted specimen. The measurement data of the specimen in the multi-wavelength photometer 16 is sent to the control unit 40.

The thermostatic chamber 17 maintains a constant temperature of the plurality of reaction containers 26 held on the reaction turntable 6.

The specimen containers 21, the dilution containers 23, the first reagent containers 24, the second reagent containers 25, and the reaction containers 26 are resin containers, for example.

The control unit 40 performs processing such as processing for controlling each unit of the automated analyzer 100, and processing for acquiring measurement data of a specimen. The control unit 40 includes, for example, a processor such as a central processing unit (CPU) and a storage unit (memory) such as a random access memory (RAM) and a read only memory (ROM). The storage unit stores programs for performing various kinds of control, and data. Functions of the control unit 40 can be realized by the processor executing the programs. Note that the functions of the control unit 40 may be realized by, for example, a general-purpose circuit such as a microcontroller or a microprocessor that operates according to a program or a dedicated circuit such as an application-specific integrated circuit (ASIC).

### 1.2. Diluted Specimen Dispensing Mechanism

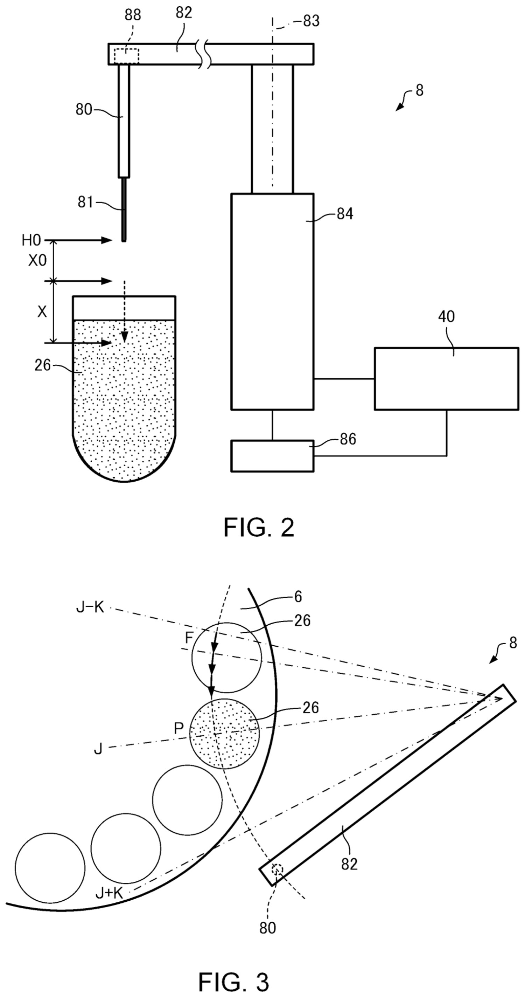

FIG. 2 is a diagram illustrating an example of the configuration of the diluted specimen dispensing mechanism 8.

As illustrated in FIG. 2, the diluted specimen dispensing mechanism 8 includes a probe 80, an arm 82 for holding the probe 80, a drive mechanism 84 for driving the arm 82, a first sensor 86 for detecting a contact of the probe 80 with a liquid surface, and a second sensor 88 for detecting a collision of the probe 80.

The probe 80 is provided with a space for containing a sucked liquid (diluted specimen). The probe 80 is made of, for example, a conductive material such as metal. A suction part 81 for sucking and discharging liquid is provided at the tip of the probe 80.

The arm 82 supports the probe 80. The probe 80 is attached to a tip of the arm 82. The arm 82 rotates about an axis 83 provided at the rear end of the arm 82.

The drive mechanism 84 moves the probe 80 in the horizontal direction by actuating the arm 82. Since the drive mechanism 84 moves the probe 80 in the horizontal direction by rotating the arm 82, the probe 80 moves along an arc having the axis 83 as the center.

The drive mechanism 84 moves the probe 80 in the vertical direction by actuating the arm 82 in the vertical direction. The drive mechanism 84 can lower the probe 80 from an origin position H0. As a result, the probe 80 can be inserted into the reaction container 26. Since the probe 80 is positioned above the reaction container 26 at the origin position H0, the probe 80 does not contact the reaction container 26 even if the probe 80 is horizontally moved.

The drive mechanism 84 causes the probe 80 to suck liquid and causes the probe 80 to dispense the liquid. The drive mechanism 84 includes, for example, a stepping motor for moving the probe 80 in the horizontal direction and a stepping motor for moving the probe 80 in the vertical direction. Further, the drive mechanism 84 includes, for example, a pump for sucking and dispensing liquid. Note that the configuration of the drive mechanism 84 is not particularly limited as long as the probe 80 can be horizontally and vertically moved and liquid can be sucked and dispensed by the probe 80.

The first sensor 86 is a capacitive sensor. For example, the first sensor 86 monitors capacitance between the suction part 81 at the tip of the probe 80 and a reference potential such as the ground and detects a change in the capacitance. When the suction part 81 of the probe 80 comes into contact with liquid, the capacitance changes, and thus it is possible to identify whether the probe 80 is in contact with the liquid surface or not by detecting a change in the capacitance using a threshold value or the like.

The second sensor 88 detects a collision of the probe 80 with a foreign object. The second sensor 88 detects a collision by detecting force applied to the probe 80. The second sensor 88 may include, for example, a light source, a detector that detects light from the light source, and a shielding plate that moves according to a displacement of the probe 80. When the suction part 81 of the probe 80 collides with a foreign object or the like and thus a predetermined load is applied to the probe 80 while the detector is detecting light from the light source, the probe 80 displaces and the shielding plate is inserted between the light source and the detector. As a result, the light from the light source is blocked, and the detector cannot detect the light. The detector outputs a signal corresponding to the intensity of detected light to the control unit 40. The control unit 40 determines that the probe 80 has collided when the intensity of the light detected by the detector is equal to or less than a threshold value, and determines that the probe 80 does not collide when the intensity of the light is greater than the threshold value.

In the case where the detection operations of the first sensor 86 and the second sensor 88 are to be performed, the control unit 40 previously lowers the probe 80 from the origin position H0 by an initial operation amount X0, and disposes the probe 80 at a detection start position H0-X0. Then, the control unit 40 lowers the probe 80 by an operation amount X at a predetermined speed. The control unit 40 acquires detection results of the first sensor 86 and detection results of the second sensor 88 while the probe 80 is lowered by the operation amount X from the detection start position H0-X0.

### 1.3. Operation of Diluted Specimen Dispensing Mechanism

FIG. 3 is a diagram for describing the operation of the diluted specimen dispensing mechanism 8.

As illustrated in FIG. 3, the diluted specimen dispensing mechanism 8 dispenses a diluted specimen to a reaction container 26 which is disposed at a dispensing possible position P (an example of a first position). The reaction container 26 is disposed at the dispensing possible position P by the reaction turntable 6. The control unit 40 stops the probe 80 at a dispensing position J (an example of a second position) and dispenses the diluted specimen to the reaction container 26 disposed at the dispensing possible position P.

### 1.4. Adjustment of Dispensing Position

In the automated analyzer 100, the control unit 40 performs processing of adjusting the dispensing position J. That is, the automated analyzer 100 automatically adjusts the dispensing position J. Adjustment of the dispensing position J is to align the dispensing position J with the center or in the vicinity of the center of the opening of the reaction container 26. More specifically, the dispensing position J is adjusted such that the dispensing position J is located at the center of a range where the trajectory of the probe 80 and the opening of a target dilution container 23 overlap. For adjustment of the dispensing position J, the stop position (dispensing position J) of the probe 80 is adjusted with respect to the reaction container 26 which is disposed at the dispensing possible position P.

The control unit 40 performs processing of disposing a reaction container 26 (an example of a target container) containing liquid for detection at the dispensing possible position P, processing of performing a first scan that repeats processing of moving the probe 80 in the horizontal direction to change the stop position of the probe 80 and processing of obtaining detection results of the first sensor 86 and detection results of the second sensor 88 at the changed stop position, and processing of correcting the dispensing position J on the basis of results of the first scan. Hereinafter, the processing adjusting the dispensing position J will be described in detail.

### 1.5. Processing of Adjusting Dispensing Position

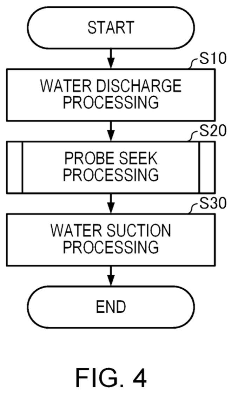

FIG. 4 is a flowchart illustrating an example of processing of adjusting the dispensing position J. As illustrated in FIG. 4, the processing of adjusting the dispensing position J includes water discharge processing S10, probe seek processing S20, and water suction processing S30.

### 1.5.1. Water Discharge Processing S10

First, the control unit 40 performs water discharge processing for supplying water to a target reaction container 26 (an example of a target container) (step S10).

The control unit 40 rotates the reaction turntable 6 such that the target reaction container 26 is positioned below the discharge nozzle of the reaction container cleaning mechanism 18. Next, the control unit 40 lowers the discharge nozzle and causes the discharge nozzle to discharge water. Accordingly, water is contained in the target reaction container 26.

Here, the position of the discharge nozzle has been adjusted. The control unit 40 identifies the target reaction container 26 from among a plurality of reaction containers 26 disposed on the reaction turntable 6 on the basis ID information of the target reaction container 26, and rotates the reaction turntable 6 such that the target reaction container 26 is positioned below the discharge nozzle. Accordingly, water can be contained in the target reaction container 26. Next, the control unit 40 rotates the reaction turntable 6 such that the reaction container 26 containing water is disposed at the dispensing possible position P. As a result, as illustrated in FIG. 3, the reaction container 26 containing water is disposed at the dispensing possible position P.

Note that, although a case where water is contained in the target reaction container 26 as liquid for detection having the liquid surface that can be detected by the first sensor 86 has been described above, the liquid for detection contained in the target reaction container 26 is not limited to water, and any liquid may be used so long as the liquid surface can be detected by the first sensor 86. For example, the liquid for detection contained in the reaction container 26 may be various cleaning solutions used for cleaning the reaction container 26 in the reaction container cleaning mechanism 18. For example, as liquid for detection contained in the reaction container 26, liquid having a high detection sensitivity for the first sensor 86 which detects a liquid surface based on a change in capacitance, for example, liquid having a higher electric conductivity than water, may be used.

### 1.5.2. Probe Seek Processing S20

Next, the control unit 40 performs probe seek processing for adjusting the stop position (dispensing position J) of the probe 80 with respect to the target reaction container 26 which is disposed at the dispensing possible position P (step S20).

In the probe seek processing S20, the dispensing position J of the probe 80 is adjusted through two-phase processing. In the first phase of the probe seek processing S20, detection operations are performed by the first sensor 86 and the second sensor 88 in a range set around the reaction container 26 disposed at the dispensing possible position P, and the position of the reaction container 26 disposed at the dispensing possible position P is identified on the basis of detection results of the first sensor 86 and the second sensor 88. In the second phase of the probe seek processing S20, on the basis of the position of the reaction container 26 identified in the first phase, detection operations are performed again by the first sensor 86 and the second sensor 88 to accurately identify the position of the reaction container 26.

### (1) First Phase

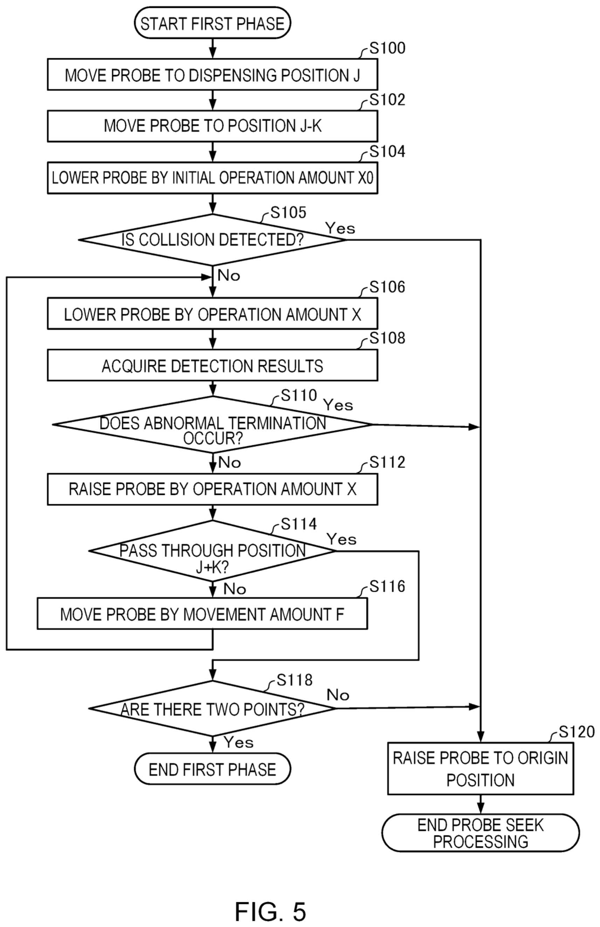

FIG. 5 is a flowchart illustrating an example of the first phase of the probe seek processing S20.

The control unit 40 first moves the probe 80 to the dispensing position J (step S100). The control unit 40 causes the drive mechanism 84 to rotate the arm 82 to move the probe 80 to the dispensing position J.

Next, the control unit 40 moves the probe 80 to a position at which a detection operation will start (step S102).

The drive mechanism 84 moves the probe 80 along an arc at a predetermined angular step. For example, a movement amount F of one step of the probe 80 is set by using an operating pulse amount (pls) of the stepping motor as a unit. For example, the movement amount F of one step of the probe 80 is set to 3 pls. Further, the range in which the detection operation is performed in the first phase ranges from J-K to J+K with the dispensing position J as the center. For example, K is set to 15 pls. Note that the movement amount F and K can be set to arbitrary values.

The control unit 40 causes the drive mechanism 84 to rotate the arm 82 to move the probe 80 to the position J-K at which the detection operation will start.

Next, the control unit 40 lowers the probe 80 from the origin position H0 by the initial operation amount X0 (step S104).

The control unit 40 causes the drive mechanism 84 to lower the arm 82 to lower the probe 80 by the initial operation amount X0 from the origin position H0. Accordingly, the probe 80 can be disposed at a detection start position H0-X0.

The control unit 40 determines whether the second sensor 88 detects a collision while the probe 80 is lowered by the initial operation amount X0 from the origin position H0 (step S105). Here, when the second sensor 88 detects a collision while the probe 80 is lowered by the initial operation amount X0 from the origin position H0, the detection start position HO-XO is located below the upper surface of the reaction container 26, and therefore there is a problem with the value of the initial operation amount X0. For example, in a case where the detection start position HO-XO is located below the upper surface of the reaction container 26, when the probe 80 is moved in processing after step S106, there is a possibility that the probe 80 may collide with the side surface of the reaction container 26, causing problems such as the probe 80 breaking.

When the control unit 40 determines that the second sensor 88 has not detected a collision (No in step S105), the control unit 40 lowers the probe 80 from the detection start position HO-XO by the operation amount X (step S106). The operation amount X is set to an amount by which the probe 80 can detect the liquid surface of water contained in the reaction container 26 when the probe 80 is lowered by the operation amount X from the detection start position HO-XO.

The control unit 40 acquires the detection results of the first sensor 86 and the detection results of the second sensor 88 while the probe 80 is lowered by the operation amount X from the detection start position HO-XO (step S108).

The control unit 40 acquires the output signals of the first sensor 86 and the second sensor 88, and records the detection results of the first sensor 86 and the second sensor 88 in a storage unit.

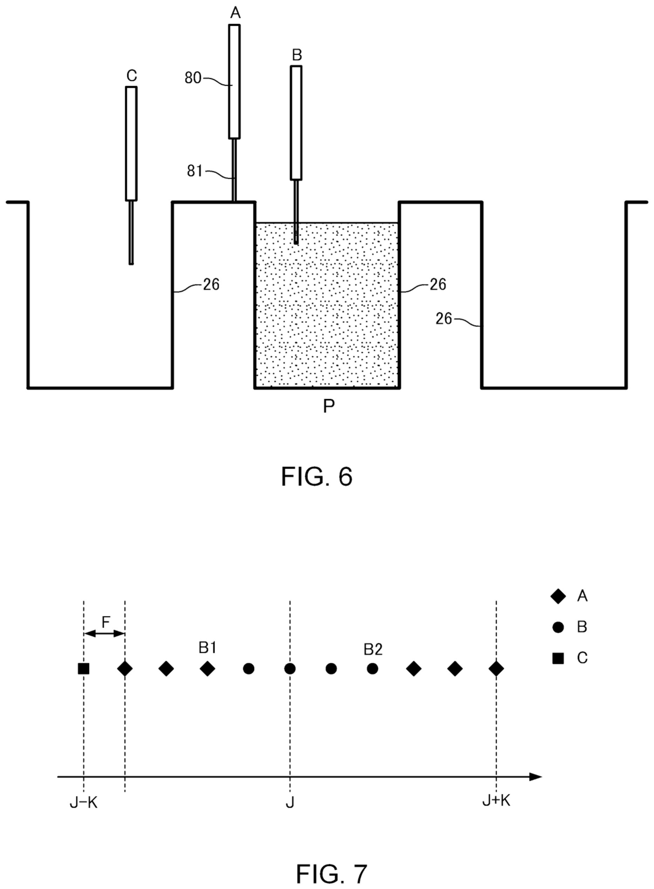

FIG. 6 is a diagram for describing detection results of the first sensor 86 and the second sensor 88.

A case where the first sensor 86 detects no liquid surface and the second sensor 88 detects a collision is assumed to be a state A. The control unit 40 determines whether the probe 80 is positioned outside the opening of the reaction container 26 when the first sensor 86 detects no liquid surface and the second sensor 88 detects a collision, that is, when the probe 80 is in the state A.

A case where the first sensor 86 detects a liquid surface and the second sensor 88 detects no collision is assumed to be a state B. The control unit 40 determines that probe 80 is positioned within the opening of the target reaction container 26 when the first sensor 86 detects a liquid surface and the second sensor 88 detects no collision, that is, when the probe 80 is in the state B. Since the liquid for detection is contained in the target reaction container 26, the first sensor 86 obtains a result of detection of the liquid surface when the probe 80 is positioned within the opening of the target reaction container 26.

A case where the first sensor 86 detects no liquid surface and the second sensor 88 detects no collision is assumed to be a state C. The control unit 40 determines that probe 80 is positioned within the opening of a reaction container 26 that is not a target when the first sensor 86 detects no liquid surface and the second sensor 88 detects no collision, that is, when the probe 80 is in the state C.

For example, at the position J-K, the probe 80 is positioned within the opening of the reaction container 26 that is not a target, and thus the first sensor 86 detects no liquid surface and the second sensor 88 detects no collision. Therefore, the detection result indicating the state C is obtained at the position J-K.

FIG. 7 is a diagram illustrating detection results of the first sensor 86 and the second sensor 88. In FIG. 7, the horizontal axis indicates the stop position of the probe 80.

As illustrated in FIG. 7, the control unit 40 stores the stop position of the probe 80 and the detection results of the first sensor 86 and the second sensor 88 in association with each other in the storage unit. Here, the control unit 40 stores the position J-K and the state C, which is the detection result at the position J-K, in association with each other in the storage unit.

The control unit 40 determines whether an abnormal termination occurs during lowering of the probe 80 (step S110). The diluted specimen dispensing mechanism 8 abnormally terminates when, for example, the probe 80 is not lowered normally or the second sensor 88 detects a foreign object at the dispensing position J.

When the control unit 40 determines that no abnormal termination occurs during lowering of the probe 80 (No in step S110), the control unit 40 causes the drive mechanism 84 to raise the arm 82 to raise the probe 80 by the operation amount X (step S112).

Next, the control unit 40 determines whether the detection operation has been performed within a preset range, that is, whether the probe 80 will pass through the position J+K when the probe 80 moves by the movement amount F (step S114). When the control unit 40 determines that the probe 80 will not pass through the position J+K (No in step S114), the control unit 40 moves the probe 80 in the horizontal direction by the movement amount F (step S116). The control unit 40 causes the drive mechanism 84 to rotate the arm 82 to move the probe 80 from the position J-K by the movement amount F.

Note that when the distance from the position J-K to the position J+K is a multiple of the movement amount F, the probe 80 is necessarily positioned at the position J+K, and thus the control unit 40 may determine whether the detection operation has been performed within the set range by determining whether the probe 80 has moved to the position J+K in the processing of step S114.

After the control unit 40 moves the probe 80 by the movement amount F (after step S116), the control unit 40 returns to step S106, lowers the probe 80 by the operation amount X (step S106), and acquires detection results (step S108). The control unit 40 determines whether an abnormal termination occurs (step S110), and when an abnormal termination does not occur (No in step S110), the control unit 40 raises the probe 80 by the operation amount X (step S112), and determines whether the probe 80 will pass through the position J+K (step S114). When the control unit 40 determines that the probe 80 will not pass through the position J+K (No in step S114), the control unit 40 moves the probe 80 by the movement amount F (step S116).

In this manner, the control unit 40 repeats the processing of steps S106 to S116 until the control unit 40 determines that the probe 80 will pass through the position J+K, except when it is determined that an abnormal termination occurs (an example of the first scan).

When the control unit 40 determines that the probe 80 will pass through the position J+K (Yes in step S114), the control unit 40 determines whether there are two boundary points between the position J-K and the position J+K where state A and state B are switched (step S118).

The control unit 40 determines whether there are two boundary points where state A and state B are switched based on the information stored in the storage unit and indicating the relationship between stop positions of the probe 80 and the detection results illustrated in FIG. 7. In the example illustrated in FIG. 7, boundary points B1 and B2 can be confirmed. The boundary points are set, for example, at stop positions on the origin side of the range where state A and state B are switched. When there are two boundary points at which the state A and the state B are switched, it can be said that the target reaction container 26 is included within the range from the position J-K to the position J+K.

When the control unit 40 determines that there are two boundary points (Yes in step S118), the control unit 40 terminates the first phase of the probe seek processing, and proceeds to the second phase.

When the control unit 40 determines that there are not two boundary points (No in step S118), when the second sensor 88 detects a collision (Yes in step S105), or when the control unit 40 determines that an abnormal termination occurs (Yes in step S110), the control unit 40 causes the drive mechanism 84 to raise the arm 82 to raise the probe 80 to the origin position H0 (step S120). Then, the control unit 40 terminates the probe seek processing S20, and proceeds to the water suction processing S30. Note that when the control unit 40 determines that there are not two boundary points (No in step S118), when the second sensor 88 detects a collision (Yes in step S105), or when the control unit 40 determines that an abnormal termination occurs (Yes in step S110), the control unit 40 stores error information indicating that the probe seek processing S20 could not be normally terminated in the storage unit.

### (2) Second Phase

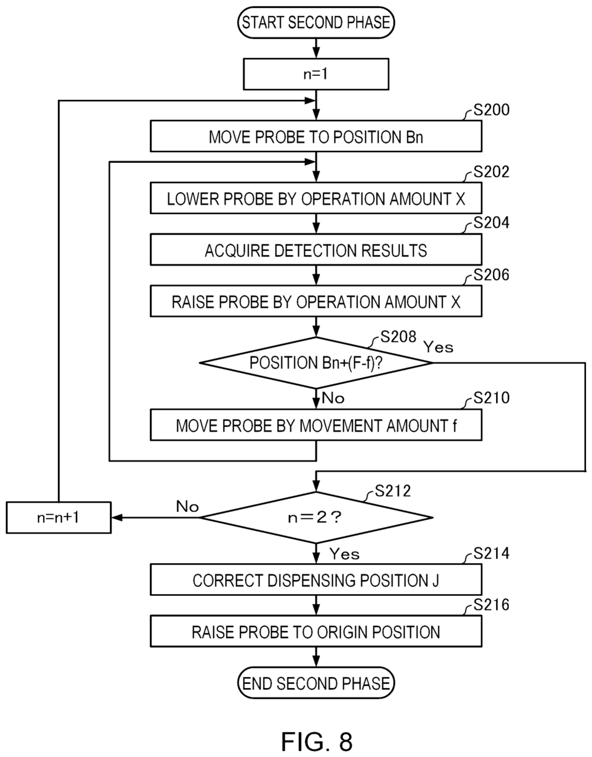

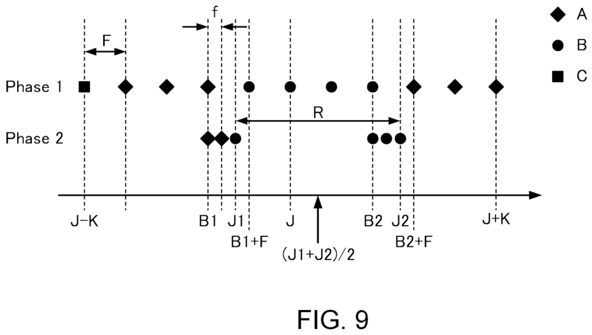

FIG. 8 is a flowchart illustrating an example of the second phase of the probe seek processing. FIG. 9 is a diagram illustrating detection results of the first sensor 86 and the second sensor 88.

In the second phase, first, a moving operation of moving the probe 80 by a movement amount f less than the movement amount F and a detection operation are repeated between a boundary point B1 and a position B1+F, and then a moving operation of moving the probe 80 by the movement amount f and a detection operation are repeated between a boundary point B2 and a position B2+F. Accordingly, the position of the target reaction container 26 can be more accurately identified.

The control unit 40 first moves the probe 80 to the boundary point B1 (n=1) at which the detection operation is started (step S200). Next, the control unit 40 lowers the probe 80 by the operation amount X from the detection start positions HO-XO (step S202). The control unit 40 acquires detection results of the first sensor 86 and detection results of the second sensor 88 while the probe 80 is lowered by the operation amount X from the detection start position HO-XO (step S204). The control unit 40 records the detection results of the first sensor 86 and the detection results of the second sensor 88 in the storage unit. Next, the control unit 40 causes the drive mechanism 84 to raise the arm 82 to raise the probe 80 by the operation amount X (step S206).

Next, the control unit 40 determines whether the detection operation has been performed for the range where the state A and the state B are switched, that is, whether the probe 80 has moved to the position B1+(F-f) (step S208). Here, the movement amount F is the movement amount of one step of the probe in the above-described first phase, and the movement amount f is the movement amount of one step of the probe 80 in the second phase. The movement amount f of one step of the probe 80 in the second phase is set, for example, to 1 pls.

When the control unit 40 determines that the probe 80 has not moved to the position B 1+(F-f) (No in step S208), the control unit 40 moves the probe 80 in the horizontal direction by movement amount f (step S210).

After the control unit 40 moves the probe 80 by the movement amount f (after step S210), the control unit 40 returns to step S202, lowers the probe 80 by the operation amount X (step S202), and acquires detection results (step S204). The control unit 40 raises the probe 80 by the operation amount X (step S206), and determines whether the probe 80 has moved to the position B 1+(F-f) (step S208). When the control unit 40 determines that the probe 80 has not moved to the position B1+(F-f) (No in step S208), the control unit 40 moves the probe 80 by movement amount f (step S210).

In this manner, the control unit 40 repeats the processing of steps S202 to S210 until the control unit 40 determines that the probe 80 has moved to the position B1+(F-f) (an example of the second scan).

When the control unit 40 determines that the probe 80 has moved to the position B1+(F-f) (Yes in step S208), the control unit 40 determines whether a detection operation has been performed for the boundary point B2, that is, whether n=2 (step S212). When the control unit 40 determines that no detection operation has been performed for the boundary point B2, that is, when the control unit 40 determines that n is not 2 (No in step S212), the control unit 40 sets n=n+1, that is, sets n=2, and returns to step S200.

The control unit 40 moves the probe 80 to the boundary point B2 (n=2) at which the detection operation is started (step S200). The control unit 40 repeats the processing of steps S202 to S210 between the boundary point B2 and position B2+F, as between the boundary point B1 and position B1+F described above, until the control unit 40 determines that the probe 80 has moved to the position B2+(F-f).

When the control unit 40 determines that the probe 80 has moved to the position B2+(F-f) (Yes in step S208), the control unit 40 determines whether a detection operation has been performed for the boundary point B2, that is, whether n=2 (step S212). When the control unit 40 determines that the detection operation has been performed for the boundary point B2, that is, when the control unit 40 determines that n=2 is satisfied (Yes in step S212), the control unit 40 corrects the dispensing position J (step S214).

The control unit 40 acquires information on stop positions of the probe 80 at which the detection results of the state B are obtained from information indicating the relationship between stop positions of the probe 80 and detection results illustrated in FIG. 9, and corrects the dispensing position J on the basis of the stop positions of the probe 80 at which the detection results of the state B are obtained. For example, when the stop positions, at which the detection results of the state B are obtained, are consecutive, the control unit 40 corrects the dispensing position J on the basis of the center of the range of the stop positions at which the detection results of the state B are consecutive.

As illustrated in FIG. 9, in the first phase (Phase 1) and the second phase (Phase 2), the stop positions at which the detection results of the state B are obtained are consecutive in the range from the position J1 to the position J2. When one end of the range R of the consecutive stop positions at which the detection results of state B are obtained (hereinafter also referred to as "the range R of the state B") is defined by the stop position J1 and the other end is defined by the stop position J2, the center of the range R of state B is (J1+J2)/2. The center of the range R of the state B can be regarded as the position of the center of the range in which the trajectory of the probe 80 and the opening of the target reaction container 26 overlap. Therefore, the control unit 40 identifies the position J1 and the position J2 from the information indicating the relationship between the stop positions of the probe 80 and the detection results, illustrated in FIG. 9, and calculates the center (J1+J2)/2 of the range R of the state B. The control unit 40 corrects the current dispensing position J, that is, the dispensing position J in step S100, such that the calculated center (J1+J2)/2 becomes the dispensing position J.

For example, the control unit 40 generates a correction pulse C=[(J1+J2)/2]-J for correcting the dispensing position J. The control unit 40 stores information on the generated correction pulse C in the storage unit. For example, the control unit 40 updates information on the dispensing position J stored in the storage unit to a dispensing position J+C.

After correcting the dispensing position J (after step S214), the control unit 40 causes the drive mechanism 84 to raise the arm 82 to raise the probe 80 to the origin position H0 (step S216). After the processing of step S216, the control unit 40 terminates the second phase.

### 1.5.3. Water Suction Processing S30

After processing of raising the probe 80 to the origin position H0 (after step S120 or after step S216), the control unit 40 performs water suction processing for sucking the water contained in the target reaction container 26 (step S30).

The control unit 40 rotates the reaction turntable 6 such that the target reaction container 26 is positioned below the suction nozzle of the reaction container cleaning mechanism 18. Next, the control unit 40 lowers the suction nozzle such that the suction nozzle sucks the water contained in the reaction container 26. This makes it possible to eliminate the water in the target reaction container 26.

After performing the water suction processing S30 (after step S30), the control unit 40 terminates the processing of adjusting the dispensing position J.

### 1.6. Effects

The automated analyzer 100 includes the reaction turntable 6 on which the plurality of reaction containers 26 are arranged, the diluted specimen dispensing mechanism 8 for dispensing a diluted specimen to a reaction container 26 disposed at the dispensing possible position P (an example of the first position) on the reaction turntable 6, and the control unit 40 for controlling the diluted specimen dispensing mechanism 8. In addition, the diluted specimen dispensing mechanism 8 includes the probe 80, the drive mechanism 84 for moving the probe 80 in the horizontal direction, the first sensor 86 for detecting contact of the probe 80 with a liquid surface, and the second sensor 88 for detecting a collision of the probe 80, and when the probe 80 stops at the dispensing position J (an example of the second position), the probe 80 dispenses a diluted specimen to the reaction container 26 disposed at the dispensing possible position P. Further, the control unit 40 performs processing of disposing a reaction container 26 containing water at the dispensing possible position P, processing of performing the first scan that repeats processing of moving the probe 80 in the horizontal direction to change the stop position of the probe 80 and processing of acquiring detection results of the first sensor 86 and detection results of the second sensor 88 at the changed stop position, and processing of correcting the dispensing position J on the basis of results of the first scan.

Accordingly, in the automated analyzer 100, the reaction container 26 containing the water can be identified on the basis of the detection results of the first sensor 86 and the second sensor 88. Therefore, in the automated analyzer 100, even if a plurality of reaction containers 26 are arranged at equal intervals, the dispensing position J can be reliably adjusted with respect to a target reaction container 26.

Further, in the automated analyzer 100, since the dispensing position J is adjusted on the basis of detection results of the first sensor 86 and the second sensor 88, restrictions on the material and shape of the reaction container 26 can be reduced. Therefore, in the automated analyzer 100, the dispensing position J can be accurately adjusted even when the reaction container 26 is made of a resin, for example.

In the automated analyzer 100, the control unit 40 changes the stop position by the movement amount F (an example of a first interval) in the processing of performing the first scan, and the control unit 40 performs processing of carrying out the second scan that repeats processing of moving the probe 80 in the horizontal direction to change the stop position of the probe 80 by the movement amount f (an example of a second interval) less than the movement amount F, and processing of acquiring detection results of the first sensor 86 and the second sensor 88 at the changed stop position after the processing of performing the first scan. Further, the control unit 40 determines boundary points B1 and B2 which are positions at which the second scan is started on the basis of a result of the first scan, and corrects the dispensing position J on the basis of a result of the second scan. Therefore, the automated analyzer 100 can adjust the dispensing position J more precisely.

In the automated analyzer 100, the control unit 40 corrects the dispensing position J on the basis of stop positions at which detection results that the first sensor 86 detects a liquid surface and the second sensor 88 detects no collision are obtained in the processing of correcting the dispensing position J. Accordingly, in the automated analyzer 100, the reaction container 26 containing the water can be identified on the basis of the detection results of the first sensor 86 and the second sensor 88. Therefore, in the automated analyzer 100, even if a plurality of reaction containers 26 are arranged at equal intervals, the dispensing position J can be reliably adjusted with respect to a target reaction container 26.

In the automated analyzer 100, in the processing of correcting the dispensing position J, when there are consecutive stop positions at which detection results that the first sensor 86 detects a liquid surface and the second sensor 88 detects no collision are obtained, the control unit 40 corrects the dispensing position J on the basis of the center (J1+J2)/2 of the range R of the state B. Therefore, the automated analyzer 100 can identify the optimum dispensing position J from the detection results of the first sensor 86 and the second sensor 88. Therefore, in the automated analyzer 100, even if a plurality of reaction containers 26 are arranged at equal intervals, the dispensing position J can be reliably adjusted with respect to a target reaction container 26.

A method of adjusting the stop position (dispensing position J) of the probe 80 in the automated analyzer 100 includes a process of disposing a reaction container 26 containing water at the dispensing possible position P, a process of performing the first scan which repeats a process of moving the probe 80 in the horizontal direction to change the stop position of the probe 80 and a process of acquiring detection results of the first sensor 86 and the second sensor 88 at the changed stop position, and a process of correcting the dispensing position J on the basis of a result of the first scan. Therefore, in the method of adjusting the stop positions of the probe 80 in the automated analyzer 100, the reaction containers 26 containing water can be identified from the detection results of the first sensor 86 and the second sensor 88, and even if a plurality of reaction containers 26 are arranged at equal intervals, the dispensing position J can be reliably adjusted with respect to a target reaction container 26.

### 1.7. Modified Examples

### 1.7.1. First Modified Example

Although a case of adjusting the dispensing position J of the probe 80 of the diluted specimen dispensing mechanism 8 with respect to the reaction container 26 has been described in the first embodiment described above, the combination of a container and a probe to be adjusted is not limited to thereto. For example, the above-described first embodiment may be applied to adjustment of the dispensing position of the probe of the original specimen dispensing mechanism 7 with respect to the dilution container 23. Further, for example, the above-described first embodiment may be applied to adjustment of the dispensing position of the probe of the first reagent dispensing mechanism 12 with respect to the reaction container 26. Further, for example, the above-described first embodiment may be applied to adjustment of the dispensing position of the probe of the second reagent dispensing mechanism 13 with respect to the reaction container 26. Note that the configurations of the original specimen dispensing mechanism 7, the first reagent dispensing mechanism 12, and the second reagent dispensing mechanism 13 are the same as that of the above-described diluted specimen dispensing mechanism 8.

Further, for example, the above-described first embodiment may be applied to adjustment of a suction position of the probe 80 of the diluted specimen dispensing mechanism 8 with respect to the dilution container 23, adjustment of a suction position of the probe of the first reagent dispensing mechanism 12 with respect to the first reagent container 24, or adjustment of a suction position of the probe of the second reagent dispensing mechanism 13 with respect to the second reagent container 25.

### 1.7.2. Second Modified Example

In the first embodiment described above, the probe seek processing S20 includes the first phase including processing of repeating processing of moving the probe 80 by the movement amount F to change the stop position (step S116) and processing of performing detection operations (step S106 and step S108), illustrated in FIG. 5, and the second phase including processing of repeating processing of moving the probe 80 by the movement amount f to change the stop position (step S210) and processing of performing detection operations (step S202 and step S204), illustrated in FIG. 8. On the other hand, the probe seek processing S20 may not include the second phase.

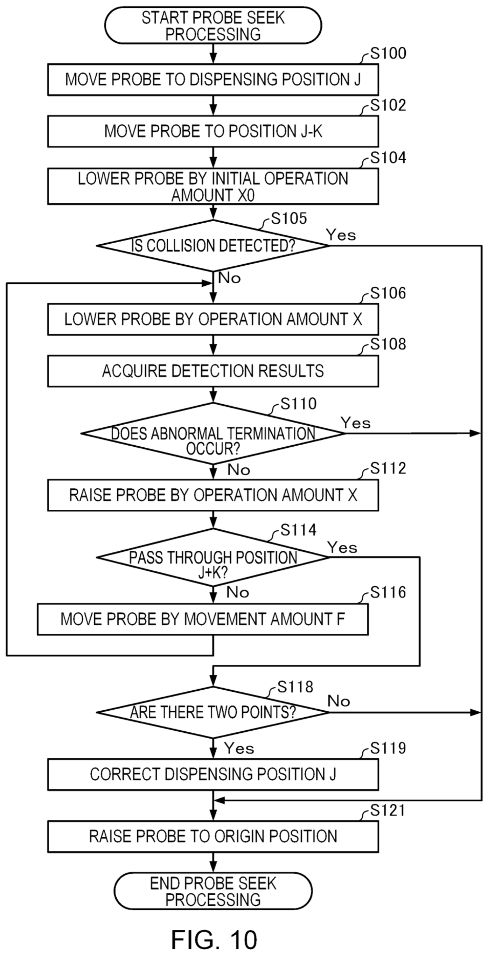

FIG. 10 is a flowchart illustrating a modified example of the probe seek processing S20. Hereinafter, differences from the aforementioned examples of the probe seek processing S20 illustrated in FIG. 5 and FIG. 8 will be described, and description of similar points will be omitted.

As illustrated in FIG. 10, when the control unit 40 determines that there are two boundary points (Yes in step S118), the control unit 40 corrects the dispensing position J (step S119).

The control unit 40 acquires information on stop positions of the probe 80 at which detection results of the state B are obtained from the information indicating the relationship between the stop positions of the probe 80 and the detection results illustrated in FIG. 7, and when the stop positions at which the detection results of the state B are obtained are consecutive, calculates the center of the range of the stop positions at which the detection results of the state B are consecutive, and corrects the dispensing position J. In the example illustrated in FIG. 7, since one end of the range in which the states B are consecutive is the position B1+F, and the other end is the position B2, the center of the range in which the states B are consecutive is (B1+F+B2)/2. The processing of correcting the dispensing position J (step S119) is performed similarly to the processing of correcting the dispensing position illustrated in FIG. 8 (step S214), for example.

After the processing of correcting the dispensing position J (after step S119), the control unit 40 causes the drive mechanism 84 to raise the arm 82 to raise the probe 80 to the origin position H0 (step S121).

After the processing of correcting the dispensing position J (after step S119), when the control unit 40 determines that there are not two boundary points (No in step S118), when the second sensor 88 detects a collision (Yes in step S105), or when it is determined that an abnormal termination occurs (Yes in step S110), the control unit 40 causes the drive mechanism 84 to raise the arm 82 to raise the probe 80 to the origin position H0 (step S121). Then, the control unit 40 terminates the probe seek processing S20 and proceeds to the water suction processing S30.

In the second modified example, similarly to the first embodiment, the reaction container 26 containing water can be identified on the basis of the detection results of the first sensor 86 and the second sensor 88, and thus even if a plurality of reaction containers 26 are arranged at equal intervals, the dispensing position J can be reliably adjusted with respect to a target reaction container 26. Furthermore, in the second modified example, the control unit 40 does not perform processing of repeating processing of moving the probe 80 by the movement amount f to change the stop position and processing of performing a detection operation, illustrated in FIG. 8, in the probe seek processing S20, the probe seek processing S20 can be performed within a short time.

### 2. Second Embodiment

### 2.1. Automated analyzer

Next, an automated analyzer according to a second embodiment will be described. A configuration of the automated analyzer according to the second embodiment is similar to the aforementioned configuration of the automated analyzer 100 illustrated in FIG. 1 and FIG. 3, and thus description thereof will be omitted.

### 2.2. Operation of Diluted Specimen Dispensing Mechanism

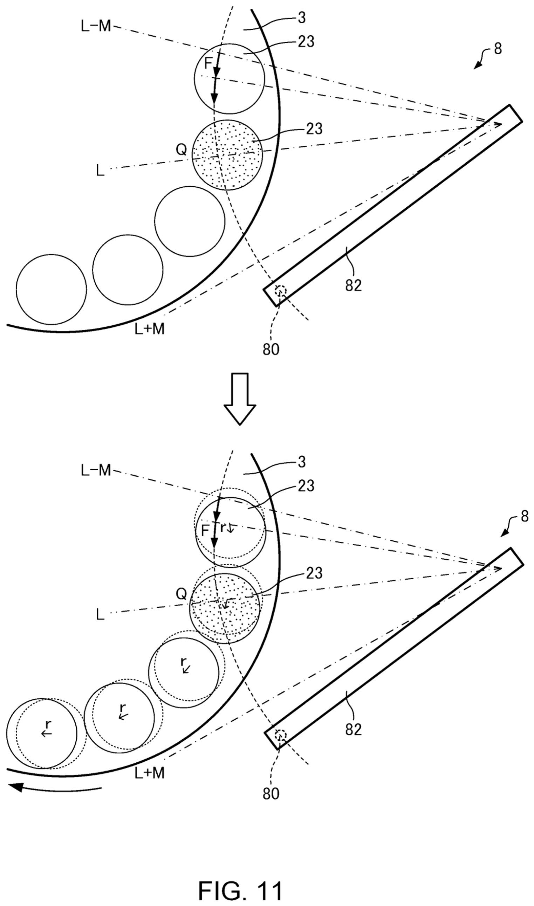

FIG. 11 is a diagram for describing the operation of the diluted specimen dispensing mechanism 8.

As illustrated in FIG. 11, the diluted specimen dispensing mechanism 8 sucks a diluted specimen from a dilution container 23 disposed at a suction possible position Q (an example of the first position). The dilution container 23 is disposed at the position Q by the dilution turntable 3. The diluted specimen dispensing mechanism 8 stops the probe 80 at a suction position L (an example of the second position), and sucks the diluted specimen from the dilution container 23 disposed at the suction possible position Q.

The dilution container 23 is moved in the horizontal direction by the dilution turntable 3. The dilution turntable 3 moves the dilution container 23 along a circle at predetermined angular steps. For example, the movement amount of one step of the dilution turntable 3 is set by using an operating pulse amount (pls) of a stepping motor as a unit.

### 2.3. Adjustment of Suction Position

Although the stop position (dispensing position J) of the probe 80 with respect to a target reaction container 26 is adjusted in the first embodiment, not only the stop position of the probe 80 but also the position of a target dilution container 23 is adjusted in the second embodiment. This makes it possible to enlarge the range in which the trajectory of probe 80 and the opening of the target dilution container 23 overlap. In the following, a case where the suction position L of the probe 80 is adjusted with respect to the dilution container 23 will be described.

### 2.4. Processing of Adjusting Suction Position

Similar to the processing of adjusting the dispensing position J illustrated in FIG. 4, processing of adjusting the suction position L of the probe 80 includes the water discharge processing S 10, the probe seek processing S20, and the water suction processing S30. Hereinafter, differences from the example of the processing of adjusting the dispensing position J illustrated in FIG. 4, FIG. 5, and FIG. 8 will be described, and description of similar points will be omitted.

### 2.4.1. Water Discharge Processing S10

First, the control unit 40 performs water discharge processing in order to supply water to a target dilution container 23 (step S10).

The control unit 40 rotates the dilution turntable 3 such that the target dilution container 23 is positioned below the discharge nozzle of the dilution container cleaning mechanism 11. Next, the control unit 40 lowers the discharge nozzle and causes the discharge nozzle to discharge water. Accordingly, water is contained in the target dilution container 23.

The control unit 40 rotates the dilution turntable 3 such that the dilution container 23 containing the water is disposed at the suction possible position Q. Accordingly, as illustrated in FIG. 11, the dilution container 23 containing the water is disposed at the suction possible position Q.

Note that, although a case where water is contained in the target dilution container 23 has been described here, the liquid for detection contained in the target dilution container 23 is not limited to water, and any liquid may be used as long as the liquid surface can be detected by the first sensor 86.

### 2.4.2. Probe Seek Processing S20

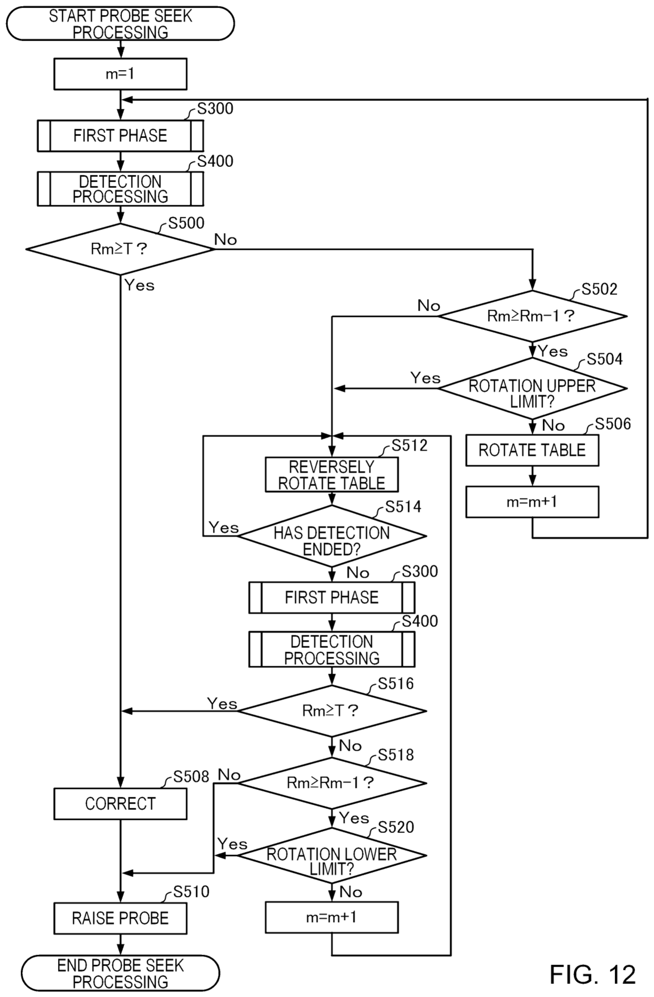

In the probe seek processing S20, similarly to the first embodiment described above, a suction position L of the probe 80 is adjusted through two-phase processing. FIG. 12 is a flowchart illustrating an example of the probe seek processing S20.

### (1) First Phase S300

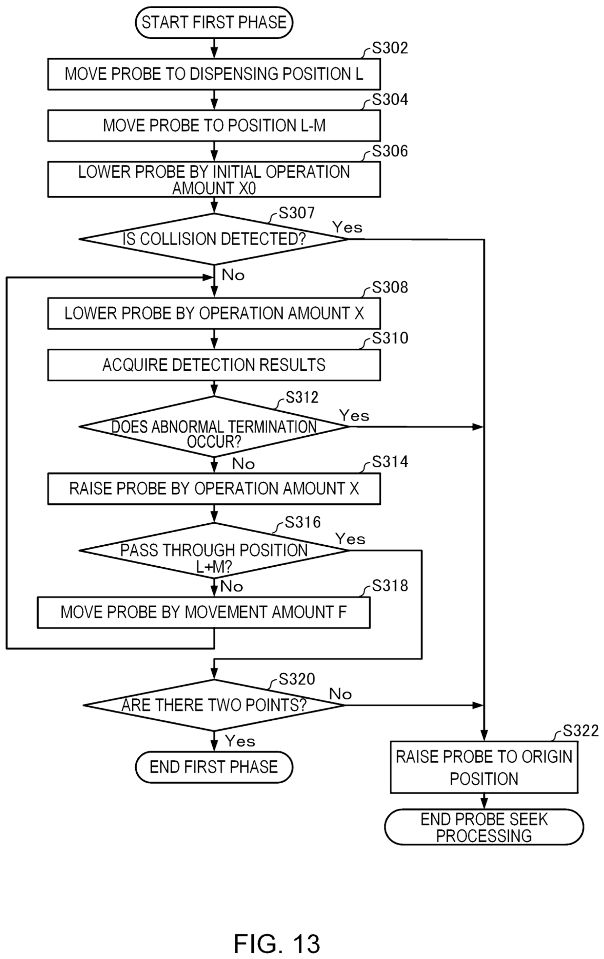

First, the control unit 40 performs processing of the first phase S300. FIG. 13 is a flowchart illustrating an example of the first phase S300 of the probe seek processing S20. The first phase S300 of the probe seek processing S20 is performed similarly to the first phase of the above-described probe seek processing illustrated in FIG. 5.

Specifically, first, the control unit 40 moves the probe 80 to the suction position L (step S302). Next, the control unit 40 moves the probe 80 to a position L-M at which a detecting operation is started (step S304). In the first phase, a range in which the detection operation is performed ranges from the position L-M to a position L+M with the suction position L as the center. In this case, M is set to 15 pls.

Next, the control unit 40 lowers the probe 80 from the origin position H0 by the initial operation amount X0 (step S306). The control unit 40 determines whether the second sensor 88 detects a collision while the probe 80 is lowered by the initial operation amount X0 from the origin position H0 (step S307). If the control unit 40 determines that the second sensor 88 detects no collision (No in step S307), the control unit 40 lowers the probe 80 from a detection start positions HO-XO by an operation amount X (step S308). The control unit 40 acquires detection results of the first sensor 86 and detection results of the second sensor 88 while the probe 80 is lowered by the operation amount X from the detection start position HO-XO (step S310).

The control unit 40 determines whether an abnormal termination occurs while lowering of the probe 80 (step S312), and when the control unit 40 determines that no abnormal termination occurs (No in step S312), the control unit 40 causes the drive mechanism 84 to raise the arm 82 to raise the probe 80 by the operation amount X (step S314).

Next, the control unit 40 determines whether the probe 80 will pass through the position L+M when the probe 80 has been moved by the movement amount F (step S316), and when the control unit 40 determines that the probe 80 will not pass through the position L+M (No in step S316), the control unit 40 moves the probe 80 in the horizontal direction by the movement amount F (step S318).

Except when it is determined that an abnormal termination occurs, the control unit 40 repeats the processing of steps S308 to S318 until it is determined that the probe 80 will pass through the position L+M (an example of the first scan).

When the control unit 40 determines that the probe 80 will pass through the position L+M (Yes in step S316), the control unit 40 determines whether there are two boundary points between the position L-M and the position L+M where the state A and the state B are switches (step S320).

When the control unit 40 determines that there are two boundary points (Yes in the step S320), the control unit 40 terminates the first phase S300 of the probe seek processing S20 and proceeds to the second phase.

When the control unit 40 determines that there are not two boundary points (No in step S320), when the second sensor 88 detects a collision (Yes in step S307), or when it is determined that an abnormal termination occurs (Yes in step S312), the control unit 40 causes the drive mechanism 84 to raise the arm 82 to raise the probe 80 to the origin position H0 (step S322). Note that when the control unit 40 determines that there are not two boundary points (No in step S320), when the second sensor 88 detects a collision (Yes in step S307), of when it is determined that an abnormal termination occurs (Yes in step S312), error information indicating that the probe seek processing S20 could not be normally terminated is stored in the storage unit. Then, the control unit 40 terminates the probe seek processing S20 and proceeds to the water suction processing S30.

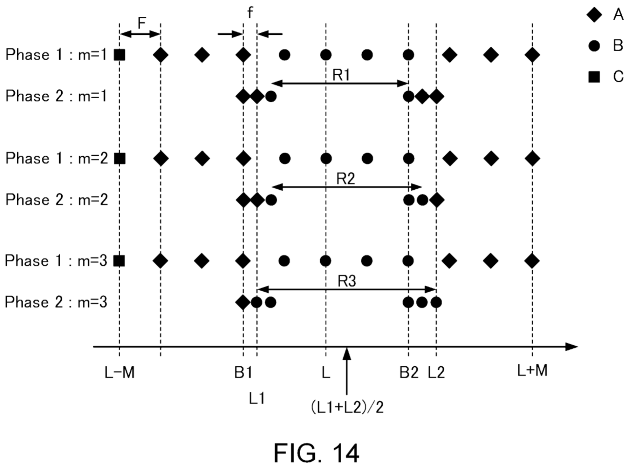

FIG. 14 is a diagram illustrating examples of detection results of the first sensor 86 and the second sensor 88. FIG. 14 illustrates detection results (Phase 1) of the first phase S300 and detection results (Phase 2) of detection processing S400 of the second phase. As illustrated in the detection results (Phase 1) of the first phase S300 in FIG. 14, detection results can be acquired at intervals of the movement amount F in the range from position L-M to position L+M in the first phase S300.

### (2) Second Phase

After the first phase S300, the control unit 40 proceeds to the second phase. In the second phase, first, the detection processing S400 is performed. The detection processing S400 corresponds to the processing of the step S200 to the step S212 in the second phase of the probe seek processing S20 illustrated in FIG. 8 described above.

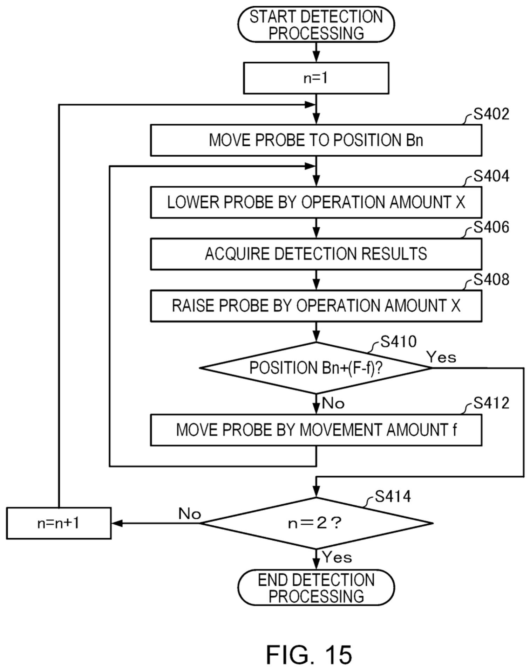

FIG. 15 is a flowchart illustrating an example of the detection processing S400 of the second phase of the probe seek processing S20.

The control unit 40 first moves the probe 80 to the boundary point B1 (n=1) at which the detection operation is started (step S402). Next, the control unit 40 lowers the probe 80 by the operation amount X from the detection start positions HO-XO (step S404). The control unit 40 acquires detection results of the first sensor 86 and detection results of the second sensor 88 while the probe 80 is lowered by the operation amount X from the detection start position HO-XO (step S406). The control unit 40 records the detection results of the first sensor 86 and the detection results of the second sensor 88 in the storage unit. Next, the control unit 40 causes the drive mechanism 84 to raise the arm 82 to raise the probe 80 by the operation amount X (step S408).

Next, the control unit 40 determines whether the detection operation has been performed for the range in which the state A to the state B are switched, that is, whether the probe 80 has moved to the position B1+(F-f) (step S410), and when the control unit 40 determines that the probe 80 has not moved to the position B1+(F-f) (No in step S410), the control unit 40 moves the probe 80 in the horizontal direction by the movement amount f (step S412).

The control unit 40 repeats the processing of step S404 to step S412 until it is determined that the probe 80 has moved to the position B1+(F-f) (an example of the second scan).

When the control unit 40 determines that the probe 80 has moved to the position B1+(F-f) (Yes in step S410), the control unit 40 determines whether a detection operation has been performed for the boundary point B2, that is, whether n=2 (step S414). When the control unit 40 determines that no detection operation has been performed for the boundary point B2, that is, when the control unit 40 determines that n is not 2 (No in step S414), the control unit 40 sets n=n+1, that is, sets n=2, and returns to step S402. In step S402, the control unit 40 moves the probe 80 to the boundary point B2.

The control unit 40 repeats the processing of step S404 to step S412 until it is determined that the probe 80 has moved to the position B2+(F-f) (an example of the second scan).

When the control unit 40 determines that the probe 80 has moved to the position B2+(F-f) (Yes in step S410), the control unit 40 terminates the detection processing S400. As illustrated in the detection results (Phase 2) of the detection processing S400 in FIG. 14, in the detection processing S400, detection results can be acquired at intervals of the movement amount f in the range from the position B1 to the position B1+(F-f).

After the detection processing S400, the control unit 40 determines whether the range Rm of the state B is equal to or greater than a threshold value T (step S500). Here, the range Rm of state B is represented, for example, as the distance between one end and the other end of the stop positions at which the detection results of consecutive states B are obtained, as illustrated in FIG. 14. For example, in the first (m=1) detection processing S400, the range R1 of the state B is R1=3xF+f. The threshold value T is set, for example, on the basis of a distance in which the trajectory of the probe 80 and the opening of the dilution container 23 overlap when the dilution container 23 is disposed at an optimal suction possible position Q. Note that the optimal suction possible position Q is a position at which the distance in which the trajectory of the probe 80 and the opening of the dilution container 23 overlap is maximized.

When the control unit 40 determines that the range Rm of the state B is not equal to or greater than the threshold value T, that is, Rm≥T is not satisfied (No in step S500), the control unit 40 determines whether the range Rm of the current state B is equal to or greater than the range Rm-1 of the previous state B (step S502). Note that, in the first processing (m=1), the value of the range R0 is set such that the second processing (m=2) is performed after the first processing, that is, such that Rm≥Rm-1 (R1≥R0) is satisfied.

When the control unit 40 determines that Rm≥Rm-1 is satisfied (Yes in step S502), the control unit 40 determines whether rotation of the dilution turntable 3 in the positive direction has reached an upper limit (step S504). The upper limit of rotation of the dilution turntable 3 is preset, and the control unit 40 determines, from the current position (rotation angle) of the dilution turntable 3, whether the rotation has reached the upper limit.

When the control unit 40 determines that the position of the dilution turntable 3 has not reached the upper limit (No in step S504), the control unit 40 rotates the dilution turntable 3 by a rotation amount r set in the positive direction (step S506).

In step S506, the suction possible position Q is changed by rotating the dilution turntable 3. Here, the rotation amount r of one step of the dilution turntable 3 is set by using an operating pulse amount (pls) of a stepping motor as a unit. For example, in step S506, the control unit 40 rotates the dilution turntable 3 in the positive direction by the amount of 10 pls. That is, the rotation amount r of one step is 10 pls. The rotation direction of the dilution turntable 3 can be set as an arbitrary direction, for example, clockwise direction is positive and counterclockwise direction is negative.

Further, in step S504, the upper limit of rotation is set to 100 pls in the positive direction from the origin position at which the dilution turntable 3 is positioned first. Further, the lower limit of rotation is set to 100 pls in the negative direction from the origin position. Note that the rotation amount r of one step, the upper limit value of rotation, and a lower limit value of rotation can be set to arbitrary values.

After rotating the dilution turntable 3 in the positive direction by the rotation amount r (after step S506), the control unit 40 returns to step S300 by setting m=m+1 (m=2), and performs the processing of the first phase S300. Next, the control unit 40 performs the detection processing S400, and determines whether the range R2 of the state B is equal to or greater than the threshold value T, that is, whether R2≥T is satisfied (step S500). When the control unit 40 determines that R2≥T is not satisfied (No in step S500), the control unit 40 determines whether the current range R2 of the state B is equal to or greater than the previous range R1 of the state B (step S502). In the example illustrated in FIG. 14, R2>R1, and therefore R2>R1 is satisfied. When the control unit 40 determines that R2≥R1 is satisfied (Yes in step S502), the control unit 40 determines whether the positive rotation of the dilution turntable 3 has reached the upper limit (step S504), and when the control unit 40 determines that the positive rotation of the dilution turntable 3 has not reached the upper limit (No in step S504), the control unit 40 rotates the dilution turntable 3 in the positive direction by the rotation amount r (step S506).

In this manner, the control unit 40 repeats the processing of the first phase S300, the detection processing S400, the step S502, the step S504, and the step S506 until the range Rm of the state B becomes equal to or greater than the threshold value T, except when Rm≥Rm-1 is not satisfied and when it is determined that the rotation of the dilution turntable 3 has reached the upper limit.

When the control unit 40 determines that the range Rm of the state B is equal to or greater than the threshold value T (Yes in the step S500), the control unit 40 corrects the suction position L (step S508).

In the example illustrated in FIG. 14, in the third (m=3) processing, the range R3 of the state B is equal to or greater than the threshold value T. The control unit 40 identifies the position L1 of one end and the position L2 of the other end in consecutive stop positions of the state B, and calculates the center (L1+L2)/2 between the position L1 and the position L2. The control unit 40 corrects the current suction position L such that the center (L1+L2)/2 becomes the suction position L.

After correcting the suction position L (after step S508), the control unit 40 causes the drive mechanism 84 to raise the arm 82 to raise the probe 80 to the origin position H0 (step S510). The control unit 40 terminates the second phase according to the above processing.

On the other hand, when the Rm≥Rm-1 is not satisfied (No in step S502) or when the control unit 40 determines that the rotation of the dilution turntable 3 has reached the upper limit (Yes in step S504), the control unit 40 rotates the dilution turntable 3 in the negative direction by the rotation amount r (step S512).

In step S512, the suction possible position Q is changed by rotating the dilution turntable 3. Here, when Rm≥Rm-1 is not satisfied in step S502, this means that the range Rm of the state B is decreased by rotating the dilution turntable 3 in the positive direction. Therefore, when Rm≥Rm-1 is not satisfied, the control unit 40 rotates the dilution turntable 3 in the negative direction. Further, when the rotation of the dilution turntable 3 has reached the upper limit, the dilution turntable 3 cannot be rotated in the positive direction, and therefore the control unit 40 rotates the dilution turntable 3 in the negative direction.

After rotating the dilution turntable 3 by the rotation amount r in the negative direction (after step S512), the control unit 40 determines whether the detection processing S400 has been performed at the stop position of the probe 80 after rotation (step S514). When the control unit 40 determines that the detection processing S400 has been performed (Yes in step S514), the control unit 40 returns to step S512, and rotates the dilution turntable 3 in the negative direction by the rotation amount r. Note that, before rotating the dilution turntable 3 in the negative direction by the rotation amount r, the control unit 40 may return the dilution turntable 3 to the origin position (that is, the position before rotating the dilution turntable 3 in the positive direction), and rotate the dilution turntable 3 by the rotation amount r in the negative direction from the origin position. As a result, the detection processing S400 has not been performed at the stop position after the dilution turntable 3 has been rotated in the negative direction, and thus processing (step S514) of determining whether the detection processing S400 has been performed becomes unnecessary.

When the control unit 40 determines that the detection processing S400 has not been performed at the stop position of the probe 80 after the rotation (No in step S514), the control unit 40 performs processing of the first phase S300 and the detection processing S400.

Next, the control unit 40 determines whether the range Rm of the state B is equal to or greater than the threshold value T, that is, whether Rm≥T is satisfied (step S516). When the control unit 40 determines that Rm≥T is not satisfied (No in step S516), the control unit 40 determines whether the range Rm of the state B is equal to or greater than the previous range Rm-1 of the state B (step S518). When the control unit 40 determines that Rm≥Rm-1 is satisfied (Yes in step S518), the control unit 40 determines whether rotation of the dilution turntable 3 in the negative direction has reached the lower limit (step S520). When the control unit 40 determines that the rotation of the dilution turntable 3 has not reached the lower limit (No in step S520), the control unit 40 returns to step S512 and rotates the dilution turntable 3 in the negative direction by the rotation amount r (step S512).

In this manner, the control unit 40 repeats the processing of step S512, step S514, the first phase S300, the detection processing S400, step S516, step S518, and step S520 until the range Rm of the state B becomes equal to or greater than the threshold value T, except when Rm≥Rm-1 is not satisfied or when it is determined that the rotation of the dilution turntable 3 has reached the lower limit.

When the control unit 40 determines that the range Rm of the state B is equal to or greater than the threshold value T (Yes in the step S516), the control unit 40 corrects the suction position L (step S508), raises the probe 80 to the origin position H0 (step S510), and terminates the probe seek processing.

On the other hand, when Rm≥Rm-1 is not satisfied (No in step S518) or when the control unit 40 determines that the rotation of the dilution turntable 3 has reached the lower limit (Yes in step S520), the control unit 40 raises the probe 80 to the origin position H0 (step S510), and terminates the probe seek processing. Note that when Rm≥Rm-1 is not satisfied (No in step S518) or when the control unit 40 determines that the rotation of the dilution turntable 3 has reached the lower limit (Yes in step S520), the control unit 40 stores error information indicating that the probe seek processing S20 could not be normally terminated in the storage unit. Note that when Rm≥Rm-1 is not satisfied (No in step S518) or when the control unit 40 determines that the rotation of the dilution turntable 3 has reached the lower limit (Yes in step S520), the control unit 40 may correct the suction position L using the maximum range Rm of the state B among the ranges Rm of the state B obtained so far.

### 2.4.3. Water Suction Processing S30

After the processing of raising the probe 80 to the origin position H0 (after step S510), the control unit 40 performs water suction processing for sucking the water contained in the target dilution container 23 (step S30).

The control unit 40 rotates the dilution turntable 3 such that the target dilution container 23 is positioned below the suction nozzle of the dilution container cleaning mechanism 11. Next, the control unit 40 lowers the suction nozzle to cause the suction nozzle to suck the water contained in the dilution container 23. Accordingly, the water in the target dilution container 23 can be eliminated.

After performing the water suction processing S30 (after step S30), the control unit 40 terminates the processing of adjusting the suction position L.

### 2.5. Effects

In the automated analyzer 100, the control unit 40 performs processing of determining whether the range Rm in which stop positions at which detection results (state B) that the first sensor 86 has detected a liquid surface and the second sensor 88 has not detected a collision are obtained are consecutive is equal to or greater than the threshold value T, and processing of rotating the dilution turntable 3 to change the suction possible position Q when the control unit 40 determines that the range Rm in which the stop positions are consecutive is not equal to or greater than the threshold value T. Further, when the control unit 40 determines that the range Rm in which the stop positions are consecutive is equal to or greater than the threshold value T, the control unit 40 performs processing of correcting the suction position L. Therefore, in the automated analyzer 100, the suction possible position Q can be corrected as well as the suction position L.

### 2.6. Modified Examples

### 2.6.1. First Modified Example

In the above-described second embodiment, in step S500 and step S516 illustrated in FIG. 12, the processing of correcting the suction position L (step S508) is performed when it is determined that Rm≥T is satisfied, and when it is determined that Rm≥T is not satisfied, the dilution turntable 3 is rotated to change the suction possible position Q, and the first phase S300 and the detection processing S400 are performed.

On the other hand, for example, in step S500 and step S516, the processing of correcting the suction position L (step S508) is performed when a designated range has only the state B, and when it is determined that a state other than the state B is present in the designated range, the dilution turntable 3 may be rotated to change the suction possible position Q, and the first phase S300 and the detection processing S400 may be performed.

### 2.6.2. Second Modified Example

In the above-described second embodiment, the probe seek processing S20 includes, as illustrated in FIG. 12, the first phase S300 including processing of repeating processing of moving the probe 80 by the movement amount F to change the stop position and processing of performing the detection operation, illustrated in FIG. 13, and the second phase including detection processing S400 of repeating processing of moving the probe 80 by the movement amount f to change the stop position and processing of performing the detection operation, illustrated in FIG. 15. On the other hand, the probe seek processing S20 may not include the detection processing S400.

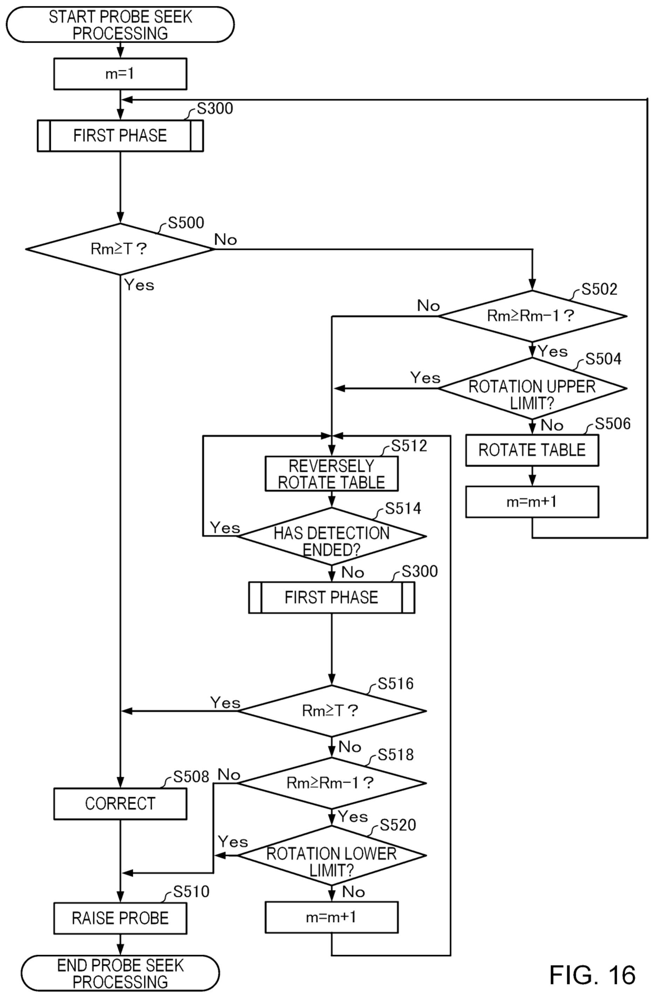

FIG. 16 is a flowchart illustrating a modified example of the probe seek processing S20. Hereinafter, differences from the aforementioned example of the probe seek processing S20 illustrated in FIG. 12 will be described, and description of similar points will be omitted.

As illustrated in FIG. 16, when the control unit 40 performs the processing of the first phase S300 illustrated in FIG. 13 and determines that there are two boundary points (Yes in step S320), the control unit 40 determines whether Rm≥T is satisfied (step S500, or step S516). In the processing of step S500 and step S516, the control unit 40 obtains the range Rm of the state B from the detection results obtained in the first phase S300 illustrated in FIG. 7, and determines whether the range Rm of the state B is equal to or greater than the threshold value.

Further, in the processing of step S508, the control unit 40 obtains the range Rm of the state B from the detection results obtained in the first phase S300 illustrated in FIG. 7, and corrects the suction position L on the basis of the range Rm of the state B.

The automated analyzer 100 according to the second modified example can also provide the same operation and effects as the automated analyzer 100 according to the second embodiment described above.

### 2.6.3. Third Modified Example

Although a case of adjusting the suction position L of the probe 80 of the diluted specimen dispensing mechanism 8 with respect to the dilution container 23 has been described in the above-described second embodiment, the combination of a container and a probe to be adjusted is not limited to thereto. For example, the above-described second embodiment may be applied to adjustment of the dispensing position J of the probe 80 of the diluted specimen dispensing mechanism 8 with respect to the reaction container 26. Further, for example, the above-described second embodiment may be applied to adjustment of the dispensing position of the probe of the original specimen dispensing mechanism 7 with respect to the dilution container 23. Further, for example, the above-mentioned second embodiment may be applied to adjustment of the dispensing position of the probe of the first reagent dispensing mechanism 12 with respect to the reaction container 26. Further, for example, the above-described embodiment may be applied to adjustment of the dispensing position of the probe of the second reagent dispensing mechanism 13 with respect to the reaction container 26.

Further, for example, the above-described embodiment may be applied to adjustment of the suction position of the probe of the first reagent dispensing mechanism 12 with respect to the first reagent container 24 or to adjustment of the suction position of the probe of the second reagent dispensing mechanism 13 with respect to the second reagent container 25.

### 3. Third Embodiment

### 3.1. Automated Analyzer

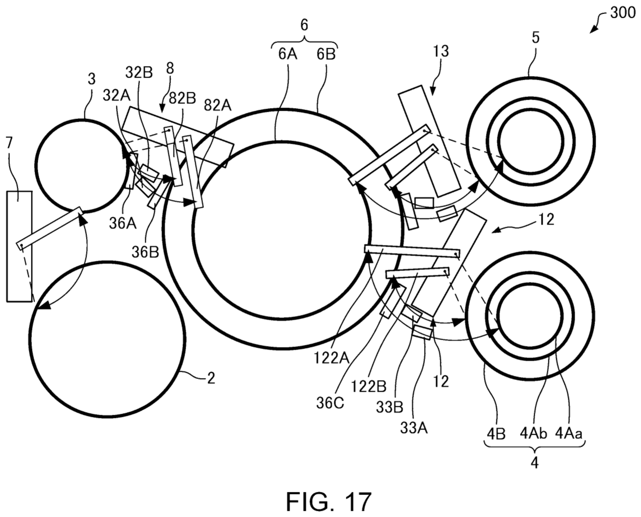

Next, an automated analyzer according to a third embodiment will be described with reference to the drawings. FIG. 17 is a diagram illustrating an example of a configuration of the automated analyzer 300 according to the third embodiment. Hereinafter, in the automated analyzer 300 according to the third embodiment, components having functions similar to those of the components of the automated analyzer 100 according to the first embodiment are given the same reference numerals, and detailed descriptions thereof will be omitted.

In the above-described automated analyzer 100 illustrated in FIG. 1, the reaction turntable 6 is one line. On the other hand, in the automated analyzer 300, the reaction turntable 6 has two lines (a first line 6A and a second line 6B) as illustrated in FIG. 17.

As illustrated in FIG. 17, the automated analyzer 300 includes a first height adjustment member 36A, a second height adjustment member 36B, a third height adjustment member 36C, a first diluted specimen probe cleaning mechanism 32A (an example of a first probe cleaning mechanism), a second diluted specimen probe cleaning mechanism 32B (an example of a second probe cleaning mechanism), a first reagent probe cleaning mechanism 33A, and a second reagent probe cleaning mechanism 33B.

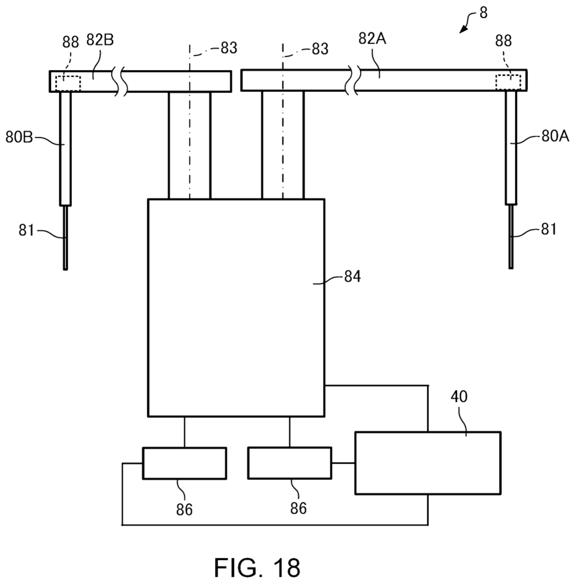

FIG. 18 is a diagram for describing an example of a configuration of the diluted specimen dispensing mechanism 8.

The diluted specimen dispensing mechanism 8 has a first diluted specimen probe 80A for dispensing diluted specimen to a reaction container 26 held on the first line 6A, and a second diluted specimen probe 80B for dispensing diluted specimen to a reaction container 26 held on a second line 6B.

First diluted specimen probe 80A is supported by a first diluted specimen arm 82A, and second diluted specimen probe 80B is supported by a second diluted specimen arm 82B. The first diluted specimen arm 82A is longer than the second diluted specimen arm 82B, for example. The first diluted specimen arm 82A and the second diluted specimen arm 82B have the same height. Accordingly, when the first diluted specimen probe 80A and the second diluted specimen probe 80B are disposed at the same position in the horizontal direction, the first diluted specimen arm 82A and the second diluted specimen arm 82B interfere with each other. Therefore, the first diluted specimen probe 80A and second diluted specimen probe 80B cannot be disposed at the same position in the horizontal direction.

Each of the first diluted specimen probe 80A and the second diluted specimen probe 80B includes a first sensor 86 and a second sensor 88.

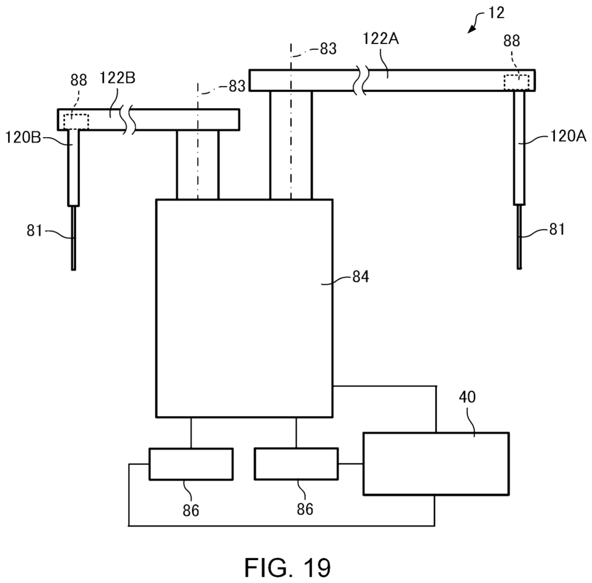

FIG. 19 is a diagram for describing an example of a configuration of the first reagent dispensing mechanism 12.

The first reagent dispensing mechanism 12 includes a first reagent probe 120A for dispensing a first reagent to a reaction container 26 held on the first line 6A, and a second reagent probe 120B for dispensing the first reagent to a reaction container 26 held on the second line 6B.

The first reagent probe 120A is supported by a first reagent arm 122A, and the second reagent probe 120B is supported by a second reagent arm 122B. The first reagent arm 122A is longer than the second reagent arm 122B, for example. The height of the first reagent arm 122A when the first reagent probe 120A is disposed at the origin position (hereinafter, also simply referred to as "the height of the first reagent arm 122A") is different from the height of the second reagent arm 122B when the second reagent probe 120B is disposed at the origin position (hereinafter, also simply referred to as "the height of the second reagent arm 122B"). For example, the height of the first reagent arm 122A is greater than the height of the second reagent arm 122B. Therefore, even when the first reagent probe 120A and the second reagent probe 120B are disposed at the same position in the horizontal direction, the first reagent arm 122A and second reagent arm 122B do not interfere with each other. Therefore, the first reagent probe 120A and the second reagent probe 120B can be disposed at the same position in the horizontal direction.

As illustrated in FIG. 17, the first reagent turntable 4 has three lines. More specifically, the first reagent turntable 4 has a first line 4Aa and a second line 4Ab accessible by the first reagent probe 120A, and a third line 4B accessible by the second reagent probe 120B. The first reagent probe 120A sucks the first reagent from either a first reagent container 24 held in the first line 4Aa or a first reagent container 24 held in the second line 4Ab. The second reagent probe 120B sucks the first reagent from the first reagent container 24 held in the third line 4B.

Each of the first reagent probe 120A and the second reagent probe 120B includes the first sensor 86 and the second sensor 88.

The first height adjustment member 36A is disposed so as to straddle the trajectory of the first diluted specimen probe 80A and the trajectory of the second diluted specimen probe 80B. The first height adjustment member 36A is disposed on a base plate on which the dilution turntable 3 is disposed. By adjusting the height of the first diluted specimen probe 80A using the first height adjustment member 36A, the height of the first diluted specimen probe 80A with respect to the dilution container 23 disposed on the dilution turntable 3 can be adjusted. Similarly, by adjusting the height of the second diluted specimen probe 80B using the first height adjustment member 36A, the height of the second diluted specimen probe 80B with respect to the dilution container 23 can be adjusted. The first height adjustment member 36A is made of a conductive material.

The second height adjustment member 36B is disposed so as to straddle the trajectory of the first diluted specimen probe 80A and the trajectory of the second diluted specimen probe 80B. The second height adjustment member 36B is disposed on a base plate on which the reaction turntable 6 is disposed. By adjusting the height of the first diluted specimen probe 80A using the second height adjustment member 36B, the height of the first diluted specimen probe 80A with respect to the reaction container 26 disposed the reaction turntable 6 can be adjusted. Similarly, by adjusting the height of the second diluted specimen probe 80B using the second height adjustment member 36B, the height of the second diluted specimen probe 80B with respect to the reaction container 26 can be adjusted. The second height adjustment member 36B is made of a conductive material.

The third height adjustment member 36C is disposed so as to straddle the trajectory of the first reagent probe 120A and the trajectory of the second reagent probe 120B. The third height adjustment member 36C is disposed on the base plate on which the reaction turntable 6 is disposed. By adjusting the height of the first reagent probe 120A using the third height adjustment member 36C, the height of the first reagent probe 120A with respect to the reaction container 26 disposed on the reaction turntable 6 can be adjusted. Similarly, by adjusting the height of the second reagent probe 120B using the third height adjustment member 36C, the height of the second reagent probe 120B with respect to the reaction container 26 can be adjusted. The third height adjustment member 36C is made of a conductive material.

The first diluted specimen probe cleaning mechanism 32A cleans the first diluted specimen probe 80A. The first diluted specimen probe cleaning mechanism 32A is disposed on the trajectory of the first diluted specimen probe 80A. The first diluted specimen probe cleaning mechanism 32A cleans the first diluted specimen probe 80A by, for example, discharging a cleaning solution, such as water, toward the first diluted specimen probe 80A.

The second diluted specimen probe cleaning mechanism 32B cleans the second diluted specimen probe 80B. The second diluted specimen probe cleaning mechanism 32B is disposed on the trajectory of the second diluted specimen probe 80B. The second diluted specimen probe cleaning mechanism 32B cleans the second diluted specimen probe 80B by, for example, discharging a cleaning solution, such as water, toward the second diluted specimen probe 80B.

The first reagent probe cleaning mechanism 33A cleans the first reagent probe 120A. The first reagent probe cleaning mechanism 33A is disposed on the trajectory of the first reagent probe 120A. The first reagent probe cleaning mechanism 33A cleans the first reagent probe 120A by, for example, discharging a cleaning solution, such as water, toward the first reagent probe 120A.

The second reagent probe cleaning mechanism 33B cleans the second reagent probe 120B. The second reagent probe cleaning mechanism 33B is disposed on the trajectory of the second reagent probe 120B. The second reagent probe cleaning mechanism 33B cleans the second reagent probe 120B by, for example, discharging a cleaning solution, such as water, toward the second reagent probe 120B.

Note that the configuration of the second reagent dispensing mechanism 13 is the same as that of the first reagent dispensing mechanism 12, and the configuration of the second reagent turntable 5 is the same as that of the first reagent turntable 4. Further, the configuration of a height checking member for adjusting the heights of the two probes of the second reagent dispensing mechanism 13 is the same as that of the third height adjustment member 36C, and the configurations of two cleaning mechanisms for cleaning the two probes of the second reagent dispensing mechanism 13 are the same as those of the first reagent probe cleaning mechanism 33A and the second reagent probe cleaning mechanism 33B. Therefore, the description thereof is omitted.

### 3.2. Adjustment Operation for Diluted Specimen Probe

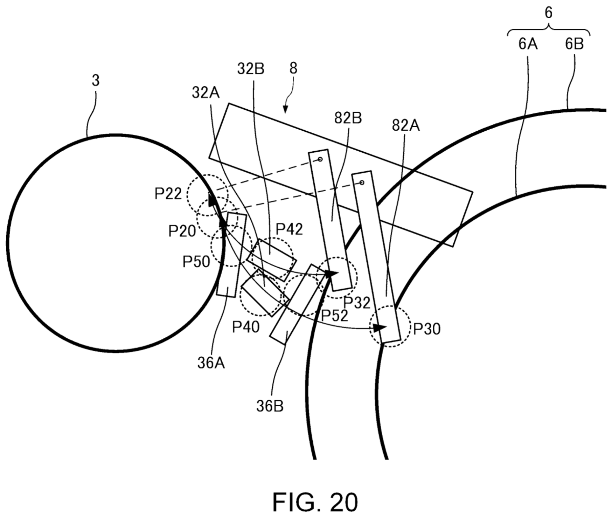

FIG. 20 is a diagram for describing an adjustment operation for the first diluted specimen probe 80A and an adjustment operation for the second diluted specimen probe 80B.

As the adjustment operation for the first diluted specimen probe 80A, the automated analyzer 300 performs adjustment of a suction position with respect to the dilution container 23, adjustment of a dispensing position with respect to the reaction container 26, adjustment of a position with respect to the first diluted specimen probe cleaning mechanism 32A, adjustment of a height with respect to the dilution container 23, and adjustment of a height with respect to the reaction container 26.

Moreover, as the adjustment operation for the second diluted specimen probe 80B, the automated analyzer 300 performs adjustment of a suction position with respect to the dilution container 23, adjustment of a dispensing position with respect to the reaction container 26, adjustment of a position with respect to the second diluted specimen probe cleaning mechanism 32B, adjustment of a height with respect to the dilution container 23, and adjustment of a height with respect to the reaction container 26.

In the automated analyzer 300, adjustment operations in which the operating range of the first diluted specimen arm 82A and the operating range of the second diluted specimen arm 82B overlap are not performed in parallel, and adjustment operations in which the operating range of the first diluted specimen arm 82A and the operating range of the second diluted specimen arm 82B do not overlap are performed in parallel. Therefore, in the automated analyzer 300, the time required for adjustment processing can be shortened.

### 3.2.1. Adjustment of Position With Respect to Dilution Container

The suction position of the first diluted specimen probe 80A with respect to the dilution container 23 is adjusted at a first suction adjustment position P20 on the dilution turntable 3. Moreover, the suction position of the second diluted specimen probe 80B with respect to the dilution container 23 is adjusted at a second suction adjustment position P22 of the dilution turntable 3.

The suction position of the first diluted specimen probe 80A with respect to the dilution container 23 is adjusted by the control unit 40 executing processing of adjusting the suction position L described above in "2.4. Processing of Adjusting Suction Position." Similarly, the suction position of the second diluted specimen probe 80B with respect to the dilution container 23 is adjusted by the control unit 40 executing processing of adjusting the suction position L described above in "2.4. Processing of Adjusting Suction Position."

### 3.2.2. Adjustment of Position With Respect to Reaction Container

The dispensing position of the first diluted specimen probe 80A with respect to the reaction container 26 is adjusted at a first dispensing adjustment position P30 on the reaction turntable 6. Moreover, the dispensing position of the second diluted specimen probe 80B with respect to the reaction container 26 is adjusted at a second dispensing adjustment position P32 on the reaction turntable 6.

The dispensing position of the first diluted specimen probe 80A with respect to the reaction container 26 is adjusted by the control unit 40 executing processing of adjusting the dispensing position J described above in "1.5. Processing of Adjusting Dispensing Position." Similarly, the dispensing position of the second diluted specimen probe 80B with respect to the reaction container 26 is adjusted by the control unit 40 executing the processing of adjusting the dispensing position J described above in "1.5. Processing of Adjusting Dispensing Position."

### 3.2.3. Adjustment of Position With Respect to Cleaning Mechanism

The position of the first diluted specimen probe 80A with respect to the first diluted specimen probe cleaning mechanism 32A is adjusted at a first cleaning position P40 where the first diluted specimen probe cleaning mechanism 32A is disposed. The position of the second diluted specimen probe 80B with respect to the second diluted specimen probe cleaning mechanism 32B is adjusted at a second cleaning position P42 where the second diluted specimen probe cleaning mechanism 32B is disposed.

For adjustment of the position of the first diluted specimen probe 80A with respect to the first diluted specimen probe cleaning mechanism 32A, first, the first diluted specimen probe 80A is passed through the first diluted specimen probe cleaning mechanism 32A in a state where the cleaning solution is discharged from the first diluted specimen probe cleaning mechanism 32A. At this time, the control unit 40 performs processing of repeating processing of changing the position of the first diluted specimen probe 80A and processing of acquiring detection results of the first sensor 86 at the changed position. The control unit 40 determines an optimum first cleaning position P40 on the basis of the result of detection by the first sensor 86 obtained for each stop position, that is, information on whether a liquid surface (liquid for detection) has been detected. For example, the control unit 40 sets the center of the range of the stop position at which the first sensor 86 has detected the liquid for detection as an optimum first cleaning position P40. The control unit 40 generates a correction value (correction pulse) for correcting the current first cleaning position P40 on the basis of the determined optimum first cleaning position P40, and stores the same in the storage unit.

Adjustment of the position of the second diluted specimen probe 80B with respect to the second diluted specimen probe cleaning mechanism 32B is performed similarly to adjustment of the position of the first diluted specimen probe 80A with respect to the first diluted specimen probe cleaning mechanism 32A described above.

### 3.2.4. Adjustment of Height of Probe

The height of the first diluted specimen probe 80A with respect to the dilution container 23 is adjusted at a first height adjustment position P50 at which the first height adjustment member 36A is disposed. The height of the first diluted specimen probe 80A with respect to the reaction container 26 is adjusted at a second height adjustment position P52 at which the second height adjustment member 36B is disposed.

The height of the second diluted specimen probe 80B with respect to the dilution container 23 is adjusted at the first height adjustment position P50 at which the first height adjustment member 36A is disposed. The height of the second diluted specimen probe 80B with respect to the reaction container 26 is adjusted at the second height adjustment position P52 at which the second height adjustment member 36B is disposed.

For adjustment of the height of the first diluted specimen probe 80A with respect to the dilution container 23, first, the control unit 40 stops the first diluted specimen probe 80A at the first height adjustment position P50. Next, the control unit 40 lowers the first diluted specimen probe 80A. When the first sensor 86 detects a contact between the first diluted specimen probe 80A and the first height adjustment member 36A, the control unit 40 stops the lowering of the first diluted specimen probe 80A. The control unit 40 calculates the position of the bottom surface of the dilution container 23 on the basis of the amount of lowering of the first diluted specimen probe 80A when the first diluted specimen probe 80A is stopped. In the storage unit, information on the difference between the height of the first height adjustment member 36A and the height of the bottom surface of the dilution container 23 is stored in advance. The control unit 40 calculates the position of the bottom surface of the dilution container 23 by subtracting or adding the difference from or to the amount of lowering of the first diluted specimen probe 80A.

Adjustment of the height of the first diluted specimen probe 80A with respect to the reaction container 26 is performed similarly to the adjustment of the height of the first diluted specimen probe 80A with respect to the dilution container 23, except that the second height adjustment member 36B is used.

Adjustment of the height of the second diluted specimen probe 80B with respect to the dilution container 23 is performed similarly to the adjustment of the height of the first diluted specimen probe 80A with respect to the dilution container 23 described above. Further, adjustment of the height of the second diluted specimen probe 80B with respect to the reaction container 26 is performed similarly to the adjustment of the height of the first diluted specimen probe 80A with respect to the reaction container 26 described above.

### 3.2.5. Adjustments That Cannot Be Performed Simultaneously

As described above, the suction position of the first diluted specimen probe 80A with respect to the dilution container 23 is adjusted at the first suction adjustment position P20, and the suction position of the second diluted specimen probe 80B with respect to the dilution container 23 is adjusted at the second suction adjustment position P22. Moreover, the height of the first diluted specimen probe 80A with respect to the dilution container 23 and the height of the second diluted specimen probe 80B with respect to the dilution container 23 are adjusted at the first height adjustment position P50.

In this case, the distance between the first suction adjustment position P20 and the first height adjustment position P50 is short. In addition, the distance between the second suction adjustment position P22 and the first height adjustment position P50 is short. Accordingly, the operating range of the first diluted specimen arm 82A at the time of adjusting the suction position of the first diluted specimen probe 80A with respect to the dilution container 23 overlaps with the operating range of the second diluted specimen arm 82B at the time of adjusting the height of the second diluted specimen probe 80B with respect to the dilution container 23. Therefore, if adjustment of the suction position of the first diluted specimen probe 80A with respect to the dilution container 23 and adjustment of the height of the second diluted specimen probe 80B with respect to the dilution container 23 are performed at the same time, the adjustments cannot be performed at the same time because the first diluted specimen arm 82A and the second diluted specimen arm 82B interfere with each other. Similarly, adjustment of the suction position of the second diluted specimen probe 80B with respect to the dilution container 23 and adjustment of the height of the first diluted specimen probe 80A with respect to the dilution container 23 cannot be performed at the same time.

Further, as described above, the dispensing position of the first diluted specimen probe 80A with respect to the reaction container 26 is adjusted at the first dispensing adjustment position P30, and the dispensing position of the second diluted specimen probe 80B with respect to the reaction container 26 is adjusted at the second dispensing adjustment position P32. Further, the height of the first diluted specimen probe 80A with respect to the reaction container 26 and the height of the second diluted specimen probe 80B with respect to the reaction container 26 are adjusted at the second height adjustment position P52.

Here, the distance between the first dispensing adjustment position P30 and the second height adjustment position P52 and the distance between the second dispensing adjustment position P32 and the second height adjustment position P52 are short. Accordingly, the operating range of the first diluted specimen probe 80A at the time of adjusting the dispensing position of the first diluted specimen probe 80A with respect to the reaction container 26 overlaps with the operating range of the second diluted specimen probe 80B at the time of adjusting the height of the second diluted specimen probe 80B with respect to the reaction container 26. Therefore, if adjustment of the dispensing position of the first diluted specimen probe 80A with respect to the reaction container 26 and adjustment of the height of the second diluted specimen probe 80B with respect to the reaction container 26 are performed at the same time, adjustments cannot be performed at the same time because the first diluted specimen arm 82A and the second diluted specimen arm 82B interfere with each other. Similarly, adjustment of the dispensing position of the second diluted specimen probe 80B with respect to the reaction container 26 and adjustment of the height of the first diluted specimen probe 80A with respect to the reaction container 26 cannot be performed at the same time.

Adjustment of the suction position of the first diluted specimen probe 80A with respect to the dilution container 23 and adjustment of the suction position of the second diluted specimen probe 80B with respect to the dilution container 23 cannot be performed at the same time because the distance between the first suction adjustment position P20 and the second suction adjustment position P22 is short.

Adjustment of the dispensing position of the first diluted specimen probe 80A with respect to the reaction container 26 and adjustment of the dispensing position of the second diluted specimen probe 80B with respect to the reaction container 26 cannot be performed at the same time because the distance between the first dispensing adjustment position P30 and the second dispensing adjustment position P32 is short.

Adjustment of the height of the first diluted specimen probe 80A with respect to the dilution container 23 and adjustment of the height of the second diluted specimen probe 80B with respect to the dilution container 23 cannot be performed at the same time because both are performed at the first height adjustment position P50.

Adjustment of the height of the first diluted specimen probe 80A with respect to the reaction container 26 and adjustment of the height of the second diluted specimen probe 80B with respect to the reaction container 26 cannot be performed at the same time because both are performed at the second height adjustment position P52.

Adjustment of the position of the first diluted specimen probe 80A with respect to the first diluted specimen probe cleaning mechanism 32A and adjustment of the position of the second diluted specimen probe 80B with respect to the second diluted specimen probe cleaning mechanism 32B cannot be performed at the same time because the distance between the first cleaning position P40 and the second cleaning position P42 is short.

### 3.2.6. Other Constraints

In the automated analyzer 300, it is desirable to adjust the suction position of the probe with respect to the dilution container 23 after the adjustment of a height with respect to the dilution container 23. At the time of adjusting the suction position of the probe, it is desirable to adjust the height with respect to the dilution container 23 before the adjustment of the suction position of the probe with respect to the dilution container 23 in order to identify the position of the target dilution container 23 by lowering the probe. Similarly, it is desirable to adjust the dispensing position of the probe with respect to the reaction container 26 after the adjustment of the height with respect to the reaction container 26.

### 3.3. Processing of Adjusting Diluted Specimen Probe

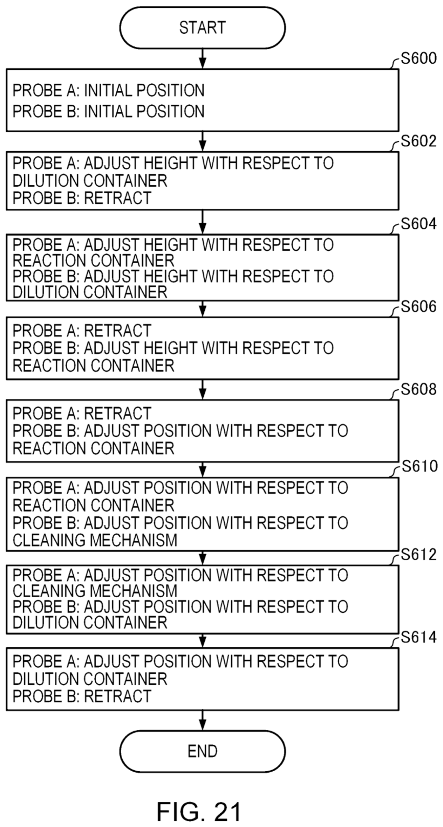

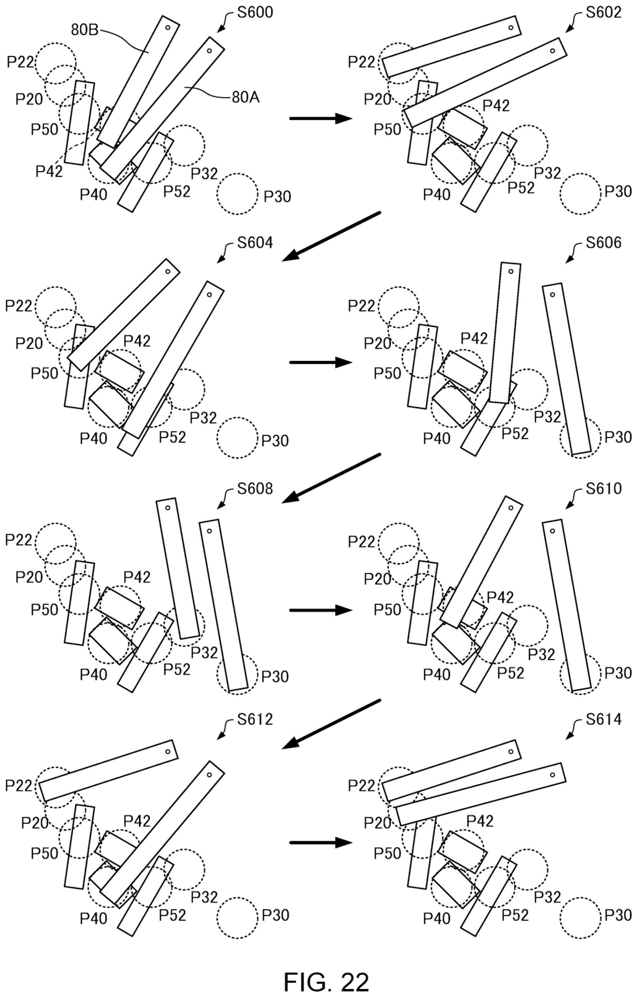

FIG. 21 is a flowchart illustrating an example of adjustment processing for the first diluted specimen probe 80A and the second diluted specimen probe 80B. Note that, in FIG. 21, the first diluted specimen probe 80A is denoted as "Probe A," and the second diluted specimen probe 80B is denoted as "Probe B." FIG. 22 is a diagram for describing the operation of the diluted specimen dispensing mechanism 8.

The control unit 40 first moves the first diluted specimen probe 80A to an initial position, and moves the second diluted specimen probe 80B to an initial position (step S600). The initial position of the first diluted specimen probe 80A is, for example, the first cleaning position P40. The initial position of the second diluted specimen probe 80B is, for example, the second cleaning position P42. Note that the initial position of each probe is not particularly limited.

Next, the control unit 40 performs processing of adjusting the height of the first diluted specimen probe 80A with respect to the dilution container 23 and processing of retracting the second diluted specimen probe 80B to the side of the dilution turntable 3 in parallel (step S602). The control unit 40 moves the first diluted specimen probe 80A from the initial position to the first height adjustment position P50, and adjusts the height of the first diluted specimen probe 80A with respect to the dilution container 23 using the first height adjustment member 36A. Moreover, the control unit 40 retracts the second diluted specimen probe 80B from the initial position to the second suction adjustment position P22. Note that the initial position of the second diluted specimen probe 80B may be set to the second suction adjustment position P22, and in step S602, the control unit 40 may maintain the state in which the second diluted specimen probe 80B has been retracted to the second suction adjustment position P22. The position to which the second diluted specimen probe 80B is retracted is not particularly limited as long as it is a position where the first diluted specimen arm 82A does not interfere with the second diluted specimen arm 82B in step S602.

Next, the control unit 40 performs processing of adjusting the height of the first diluted specimen probe 80A with respect to the reaction container 26 and processing of adjusting the height of the second diluted specimen probe 80B with respect to the dilution container 23 in parallel (step S604). The control unit 40 moves the first diluted specimen probe 80A from the first height adjustment position P50 to the second height adjustment position P52, and adjusts the height of the first diluted specimen probe 80A with respect to the reaction container 26 using the second height adjustment member 36B. Further, the control unit 40 moves the second diluted specimen probe 80B from the second suction adjustment position P22 to the first height adjustment position P50, and adjusts the height of the second diluted specimen probe 80B with respect to the dilution container 23 using the first height adjustment member 36A.

Next, the control unit 40 performs processing of retracting the first diluted specimen probe 80A to the side of the reaction turntable 6 and processing of adjusting the height of the second diluted specimen probe 80B with respect to the reaction container 26 in parallel (step S606). For example, the control unit 40 retracts the first diluted specimen probe 80A from the second height adjustment position P52 to the first dispensing adjustment position P30. Note that the position to which the first diluted specimen probe 80A is retracted is not particularly limited as long as it is a position where the first diluted specimen arm 82A does not interfere with the second diluted specimen arm 82B in step S606. Moreover, the control unit 40 moves the second diluted specimen probe 80B from the first height adjustment position P50 to the second height adjustment position P52, and adjusts the height of the second diluted specimen probe 80B with respect to the reaction container 26 using the second height adjustment member 36B.

Next, the control unit 40 performs processing of maintaining the state in which the first diluted specimen probe 80A has been retracted to the side of the reaction turntable 6 and processing of adjusting the dispensing position of the second diluted specimen probe 80B with respect to the reaction container 26 in parallel (step S608). The control unit 40 maintains a state in which the first diluted specimen probe 80A is stopped at the first dispensing adjustment position P30. Further, the control unit 40 moves the second diluted specimen probe 80B from the second height adjustment position P52 to the second dispensing adjustment position P32 and adjusts the dispensing position of the second diluted specimen probe 80B with respect to the reaction container 26.

Next, the control unit 40 performs processing of adjusting the dispensing position of the first diluted specimen probe 80A with respect to the reaction container 26 and processing of adjusting the position of the second diluted specimen probe 80B with respect to the second diluted specimen probe cleaning mechanism 32B in parallel (step S610). Since the first diluted specimen probe 80A stops at the first dispensing adjustment position P30, the control unit 40 adjusts the dispensing position of the first diluted specimen probe 80A with respect to the reaction container 26. Further, the control unit 40 moves the second diluted specimen probe 80B from the second dispensing adjustment position P32 to the second cleaning position P42 and adjusts the position of the second diluted specimen probe 80B with respect to the second diluted specimen probe cleaning mechanism 32B.

Next, the control unit 40 performs processing of adjusting the position of the first diluted specimen probe 80A with respect to the first diluted specimen probe cleaning mechanism 32A and processing of adjusting the suction position of the second diluted specimen probe 80B with respect to the dilution container 23 in parallel (step S612). The control unit 40 moves the first diluted specimen probe 80A from the first dispensing adjustment position P30 to the first cleaning position P40 and adjusts the position of the first diluted specimen probe 80A with respect to the first diluted specimen probe cleaning mechanism 32A. Further, the control unit 40 moves the second diluted specimen probe 80B from the second cleaning position P42 to the second suction adjustment position P22 and adjusts the suction position of the second diluted specimen probe 80B with respect to the dilution container 23.

Next, the control unit 40 performs processing of adjusting the suction position of the first diluted specimen probe 80A with respect to the dilution container 23 and processing of retracting the second diluted specimen probe 80B to the side of the dilution turntable 3 in parallel (step S614). The control unit 40 moves the first diluted specimen probe 80A from the first cleaning position P40 to the first suction adjustment position P20 and adjusts the suction position of the first diluted specimen probe 80A with respect to the dilution container 23. Further, the control unit 40 retracts the second diluted specimen probe 80B, for example, by maintaining the state in which the second diluted specimen probe 80B stops at the second suction adjustment position P22. Note that the position to which the second diluted specimen probe 80B is retracted is not particularly limited as long as it is a position where the first diluted specimen arm 82A does not interfere with the second diluted specimen arm 82B.

After the processing of step S614, the control unit 40 terminates the adjustment processing for the first diluted specimen probe 80A and the second diluted specimen probe 80B.

### 3.4. Modified Examples of Adjustment Processing for Dilute Specimen Probe

Next, modified examples of the above-described adjustment processing for the first diluted specimen probe 80A and the second diluted specimen probe 80B illustrated in FIG. 21 will be described. Hereinafter, differences from the aforementioned example of the adjustment processing illustrated in FIG. 21 will be described, and description of similar points will be omitted.

### 3.4.1. First Modified Example

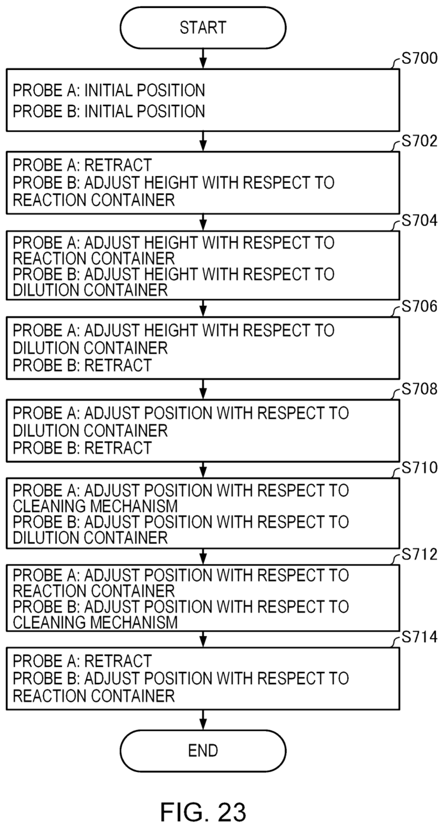

FIG. 23 is a flowchart illustrating a first modified example of the adjustment processing for the first diluted specimen probe 80A and the second diluted specimen probe 80B.

The control unit 40 first moves the first diluted specimen probe 80A to an initial position, and moves the second diluted specimen probe 80B to an initial position (step S700).

Next, the control unit 40 performs processing of retracting the first diluted specimen probe 80A to the side of the reaction turntable 6 and processing of adjusting the height of the second diluted specimen probe 80B with respect to the reaction container 26 in parallel (step S702).

Next, the control unit 40 performs processing of adjusting the height of the first diluted specimen probe 80A with respect to the reaction container 26 and processing of adjusting the height of the second diluted specimen probe 80B with respect to the dilution container 23 in parallel (step S704).

Next, the control unit 40 performs processing of adjusting the height of the first diluted specimen probe 80A with respect to the dilution container 23 and processing of retracting the second diluted specimen probe 80B to the side of the dilution turntable 3 in parallel (step S706).

Next, the control unit 40 performs processing of adjusting the suction position of the first diluted specimen probe 80A with respect to the dilution container 23 and processing of maintaining the state in which the second diluted specimen probe 80B has been retracted to the side of the dilution turntable 3 in parallel (step S708).

Next, the control unit 40 performs processing of adjusting the position of the first diluted specimen probe 80A with respect to the first diluted specimen probe cleaning mechanism 32A and processing of adjusting the suction position of the second diluted specimen probe 80B with respect to the dilution container 23 in parallel (step S710).

Next, the control unit 40 performs processing of adjusting the dispensing position of the first diluted specimen probe 80A with respect to the reaction container 26 and processing of adjusting the position of the second diluted specimen probe 80B with respect to the second diluted specimen probe cleaning mechanism 32B in parallel (step S712).

Next, the control unit 40 performs processing of retracting the first diluted specimen probe 80A to the side of the reaction turntable 6 and processing of adjusting the dispensing position of the second diluted specimen probe 80B with respect to the reaction container 26 in parallel (step S714). After the processing of step S714, the control unit 40 terminates the adjustment processing for the first diluted specimen probe 80A and the second diluted specimen probe 80B.

### 3.4.2. Second Modified Example

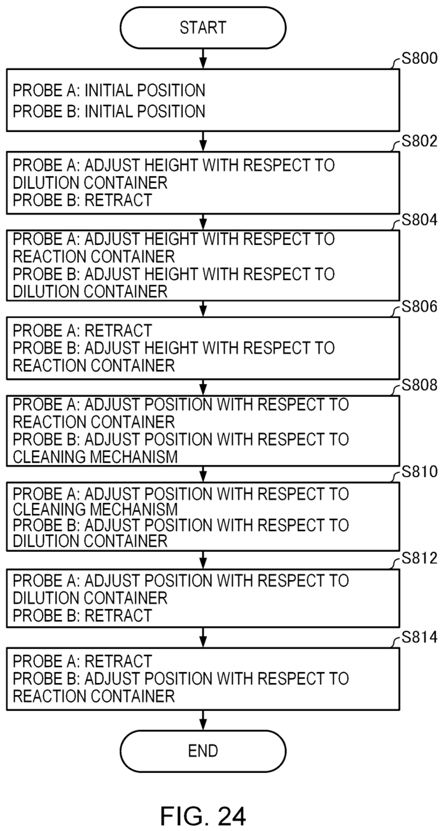

FIG. 24 is a flowchart illustrating a second modified example of the adjustment processing for the first diluted specimen probe 80A and the second diluted specimen probe 80B.

The control unit 40 first moves the first diluted specimen probe 80A to an initial position, and moves the second diluted specimen probe 80B to an initial position (step S800).

Next, the control unit 40 performs processing of adjusting the height of the first diluted specimen probe 80A with respect to the dilution container 23 and processing of retracting the second diluted specimen probe 80B to the side of the dilution turntable 3 in parallel (step S802).

Next, the control unit 40 performs processing of adjusting the height of the first diluted specimen probe 80A with respect to the reaction container 26 and processing of adjusting the height of the second diluted specimen probe 80B with respect to the dilution container 23 in parallel (step S804).

Next, the control unit 40 performs processing of retracting the first diluted specimen probe 80A to the side of the reaction turntable 6 and processing of adjusting the height of the second diluted specimen probe 80B with respect to the reaction container 26 in parallel (step S806).

Next, the control unit 40 performs processing of adjusting the dispensing position of the first diluted specimen probe 80A with respect to the reaction container 26 and processing of adjusting the position of the second diluted specimen probe 80B with respect to the second diluted specimen probe cleaning mechanism 32B in parallel (step S808).

Next, the control unit 40 performs processing of adjusting the position of the first diluted specimen probe 80A with respect to the first diluted specimen probe cleaning mechanism 32A and processing of adjusting the suction position of the second diluted specimen probe 80B with respect to the dilution container 23 in parallel (step S810).

Next, the control unit 40 performs processing of adjusting the suction position of the first diluted specimen probe 80A with respect to the dilution container 23 and processing of retracting the second diluted specimen probe 80B to the side of the dilution turntable 3 in parallel (step S812).

Next, the control unit 40 performs processing of retracting the first diluted specimen probe 80A to the side of the reaction turntable 6 and processing of adjusting the dispensing position of the second diluted specimen probe 80B with respect to the reaction container 26 in parallel (step S814). After the processing of step S814, the control unit 40 terminates the adjustment processing for the first diluted specimen probe 80A and the second diluted specimen probe 80B.

### 3.4.3. Third Modified Example

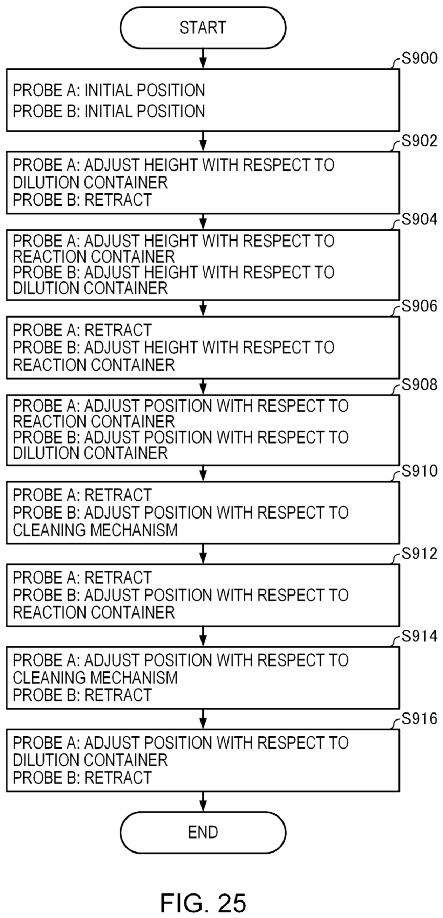

FIG. 25 is a flowchart illustrating a third modified example of the adjustment processing for the first diluted specimen probe 80A and the second diluted specimen probe 80B.

The control unit 40 first moves the first diluted specimen probe 80A to an initial position, and moves the second diluted specimen probe 80B to an initial position (step S900).

Next, the control unit 40 performs processing of adjusting the height of the first diluted specimen probe 80A with respect to the dilution container 23 and processing of retracting the second diluted specimen probe 80B to the side of the dilution turntable 3 in parallel (step S902).

Next, the control unit 40 performs processing of adjusting the height of the first diluted specimen probe 80A with respect to the reaction container 26 and processing of adjusting the height of the second diluted specimen probe 80B with respect to the dilution container 23 in parallel (step S904).

Next, the control unit 40 performs processing of retracting the first diluted specimen probe 80A to the side of the reaction turntable 6 and processing of adjusting the height of the second diluted specimen probe 80B with respect to the reaction container 26 in parallel (step S906).

Next, the control unit 40 performs processing of adjusting the dispensing position of the first diluted specimen probe 80A with respect to the reaction container 26 and processing of adjusting the suction position of the second diluted specimen probe 80B with respect to the dilution container 23 in parallel (step S908).

Next, the control unit 40 performs processing of retracting the first diluted specimen probe 80A to the side of the reaction turntable 6 and processing of adjusting the position of the second diluted specimen probe 80B with respect to the second diluted specimen probe cleaning mechanism 32B in parallel (step S910).

Next, the control unit 40 performs processing of maintaining the state in which the first diluted specimen probe 80A has been retracted to the side of the reaction turntable 6 and processing of adjusting the dispensing position of the second diluted specimen probe 80B with respect to the reaction container 26 in parallel (step S912).

Next, the control unit 40 performs processing of adjusting the position of the first diluted specimen probe 80A with respect to the first diluted specimen probe cleaning mechanism 32A and processing of retracting the second diluted specimen probe 80B to the side of the reaction turntable 6 in parallel (step S914).

Next, the control unit 40 performs processing of adjusting the suction position of the first diluted specimen probe 80A with respect to the dilution container 23 and processing of maintaining the state in which the second diluted specimen probe 80B has been retracted to the side of the reaction turntable 6 in parallel (step S916). After the processing of step S916, the control unit 40 terminates the adjustment processing for the first diluted specimen probe 80A and the second diluted specimen probe 80B.

### 3.5. Adjustment Processing for Reagent Probe of First Reagent Dispensing Mechanism

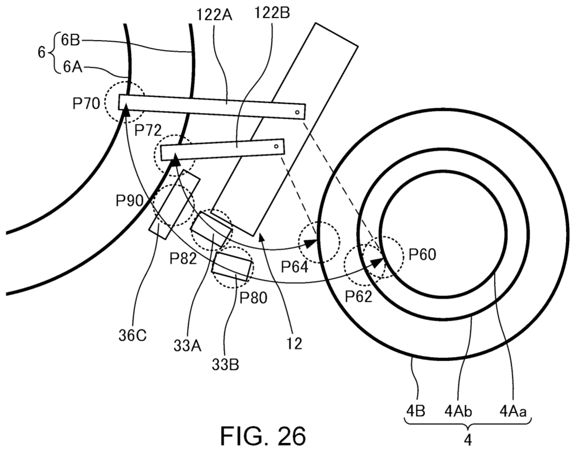

FIG. 26 is a diagram for describing an adjustment operation for the first reagent probe 120A and an adjustment operation for the second reagent probe 120B.

As the adjustment operation for the first reagent probe 120A, the automated analyzer 300 performs adjustment of the position with respect to the first reagent turntable 4, adjustment of the dispensing position with respect to the reaction container 26, adjustment of the position with respect to the first reagent probe cleaning mechanism 33A, and adjustment of the height with respect to the reaction container 26.

Further, as the adjustment operation for the second reagent probe 120B, the automated analyzer 300 performs adjustment of the position with respect to the first reagent turntable 4, adjustment of the dispensing position with respect to the reaction container 26, adjustment of the position with respect to the second reagent probe cleaning mechanism 33B, and adjustment of the height with respect to the reaction container 26.

In the automated analyzer 300, adjustment operations in which the operating range of the first reagent arm 122A and the operating range of the second reagent arm 122B overlap are not performed in parallel, and adjustment operations in which the operating range of the first reagent arm 122A and the operating range of the second reagent arm 122B do not overlap are performed in parallel. Therefore, in the automated analyzer 300, the time required for adjustment processing can be shortened.

### 3.5.1. Adjustment of Position With Respect to First Reagent Turntable

The position of the first reagent probe 120A with respect to the first reagent container 24 disposed on the first reagent turntable 4 is adjusted using metal jigs disposed on the first reagent turntable 4. Since the first reagent probe 120A is accessible to the first line 4Aa and the second line 4Ab, at the time of adjusting the position of the first reagent probe 120A with respect to the first reagent container 24, the position with respect to a metal jig disposed on the first line 4Aa and the position with respect to a metal jig disposed on the second line 4Ab are adjusted.

The position of the first reagent probe 120A with respect to the metal jig disposed on the first line 4Aa is adjusted at a first jig adjustment position P60 on the first line 4Aa. Moreover, the position of the first reagent probe 120A with respect to metal jig disposed on the second line 4Ab is adjusted at a second jig adjustment position P62 on the second line 4Ab.

The position (horizontal position) of the first reagent probe 120A with respect to a metal jig is adjusted using the first sensor 86. When the first reagent probe 120A comes into contact with the metal jig, the capacitance monitored by the first sensor 86 changes. Therefore, by disposing a metal jig on the first reagent turntable 4, the position of the first reagent probe 120A with respect to the metal jig can be adjusted by performing processing of repeating processing of changing the probe stop position and processing of acquiring detection results of the first sensor 86, similar to the probe seek processing S20 illustrated in FIG. 4 described above. Since the position (horizontal position) of the metal jig on the first reagent turntable 4 is known, the suction position of the first reagent probe 120A with respect to the first reagent container 24 disposed on the first reagent turntable 4 can be adjusted by adjusting the position of the first reagent probe 120A with respect to the metal jig.

Note that although the first sensor 86 is used to detect a metal jig above, the second sensor 88 may be used to detect a metal jig.

Adjustment of the position (horizontal position) of the second reagent probe 120B with respect to the first reagent container 24 disposed on the first reagent turntable 4 is performed similarly to the above-mentioned adjustment of the position of the first reagent probe 120A with respect to the first reagent container 24. That is, adjustment of the position of the second reagent probe 120B with respect to the first reagent container 24 is performed by adjusting the position of the second reagent probe 120B with respect to the metal jig disposed on the third line 4B. The position of the second reagent probe 120B with respect to the metal jig disposed on the third line 4B is adjusted at a third jig adjustment position P64 on the first reagent turntable 4.

### 3.5.2. Adjustment of Position With Respect to Reaction Container

The dispensing position of the first reagent probe 120A with respect to the reaction container 26 is adjusted at a third dispensing adjustment position P70 on the reaction turntable 6. Further, the dispensing position of the second reagent probe 120B with respect to the reaction container 26 is adjusted at a fourth dispensing adjustment position P72 on the reaction turntable 6.

The adjustment of the dispensing position of the first reagent probe 120A with respect to the reaction container 26 is performed similarly to the above-mentioned processing of adjusting the dispensing position J illustrated in FIG. 4. Similarly, the adjustment of the dispensing position of the second reagent probe 120B with respect to the reaction container 26 is performed similarly to the above-described processing of adjusting the dispensing position J illustrated in FIG. 4.

### 3.5.3. Adjustment of Position With Respect to Cleaning Mechanism

The position of the first reagent probe 120A with respect to the first reagent probe cleaning mechanism 33A is adjusted at a third cleaning position P80 where the first reagent probe cleaning mechanism 33A is disposed. The position of the second reagent probe 120B with respect to the second reagent probe cleaning mechanism 33B is adjusted at a fourth cleaning position P82 where the second reagent probe cleaning mechanism 33B is disposed.

Adjustment of the position of the first reagent probe 120A with respect to the first reagent probe cleaning mechanism 33A and adjustment of the position of the second reagent probe 120B with respect to the second reagent probe cleaning mechanism 33B are performed similarly to the adjustment of the position of the first diluted specimen probe 80A with respect to the first diluted specimen probe cleaning mechanism 32A described above.

### 3.5.4. Adjustment of Height of Probe

The height of the first reagent probe 120A with respect to the reaction container 26 and the height of the second reagent probe 120B with respect to the reaction container 26 are adjusted at a third height adjustment position P90 where the third height adjustment member 36C is disposed.

The adjustment of the height of the first reagent probe 120A with respect to the reaction container 26 and the adjustment of the height of the second reagent probe 120B with respect to the reaction container 26 are performed similarly to the adjustment of the height of the first diluted specimen probe 80A with respect to the reaction container 26.

### 3.5.5. Adjustments That Cannot Be Performed Simultaneously

As described above, the dispensing position of the first reagent probe 120A with respect to the reaction container 26 is adjusted at the third dispensing adjustment position P70, and the dispensing position of the second reagent probe 120B with respect to the reaction container 26 is adjusted at the fourth dispensing adjustment position P72. The height of the first reagent probe 120A with respect to the reaction container 26 and the height of the second reagent probe 120B with respect to the reaction container 26 are adjusted at the third height adjustment position P90.

Here, the distance between third dispensing adjustment position P70 and third height adjustment position P90 is short. Moreover, the distance between fourth dispensing adjustment position P72 and third height adjustment position P90 is short. Therefore, the operating range of the first reagent probe 120A at the time of adjusting the dispensing position of the first reagent probe 120A with respect to the reaction container 26 overlaps with the operating range of the second reagent probe 120B at the time of adjusting the height of the second reagent probe 120B with respect to the reaction container 26. Accordingly, when the aforementioned adjustments are performed at the same time, the first reagent arm 122A and the second reagent arm 122B interfere with each other, and thus these adjustments cannot be performed at the same time. Similarly, adjustment of the dispensing position of the second reagent probe 120B with respect to the reaction container 26 and adjustment of the height of the first reagent probe 120A with respect to the reaction container 26 cannot be performed at the same time.

Adjustment of the position of the first reagent probe 120A with respect to the first reagent container 24 and adjustment of the position of the second reagent probe 120B with respect to the first reagent container 24 cannot be performed at the same time because the distance between the first jig adjustment position P60 and the third jig adjustment position P64 and the distance between the second jig adjustment position P62 and the third jig adjustment position P64 are short.

Adjustment of the position of the first reagent probe 120A with respect to the reaction container 26 and adjustment of the position of the second reagent probe 120B with respect to the reaction container 26 cannot be performed at the same time because the distance between the third dispensing adjustment position P70 and the fourth dispensing adjustment position P72 is short.

Adjustment of the height of the first reagent probe 120A with respect to the reaction container 26 and adjustment of the height of the second reagent probe 120B with respect to the reaction container 26 cannot be performed at the same time because both are performed at the third height adjustment position P90.

Adjustment of the position of the first reagent probe 120A with respect to the first reagent probe cleaning mechanism 33A and adjustment of the position of the second reagent probe 120B with respect to the second reagent probe cleaning mechanism 33B cannot be performed at the same time because the distance between the third cleaning position P80 and the fourth cleaning position P82 is short.

### 3.5.6. Other Constraints

In the automated analyzer 300, it is desirable to adjust the dispensing position of the first reagent probe 120A with respect to the reaction container 26 after adjustment of the height of the first reagent probe 120A with respect to the reaction container 26. Similarly, it is desirable to adjust the dispensing position of the second reagent probe 120B with respect to the reaction container 26 after adjustment of the height of the second reagent probe 120B with respect to the reaction container 26.

### 3.6. Adjustment Processing for Reagent Probe of First Reagent Dispensing Mechanism

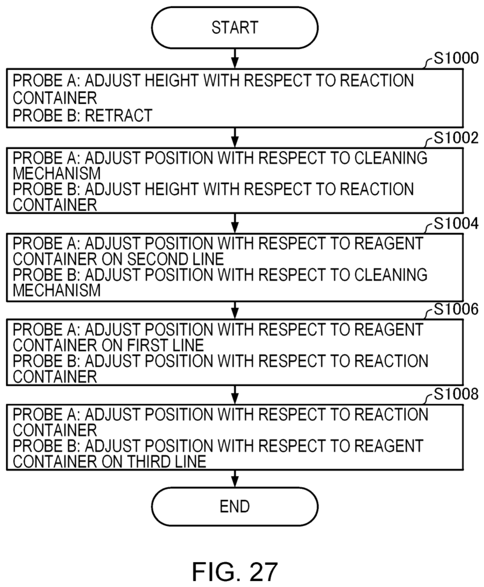

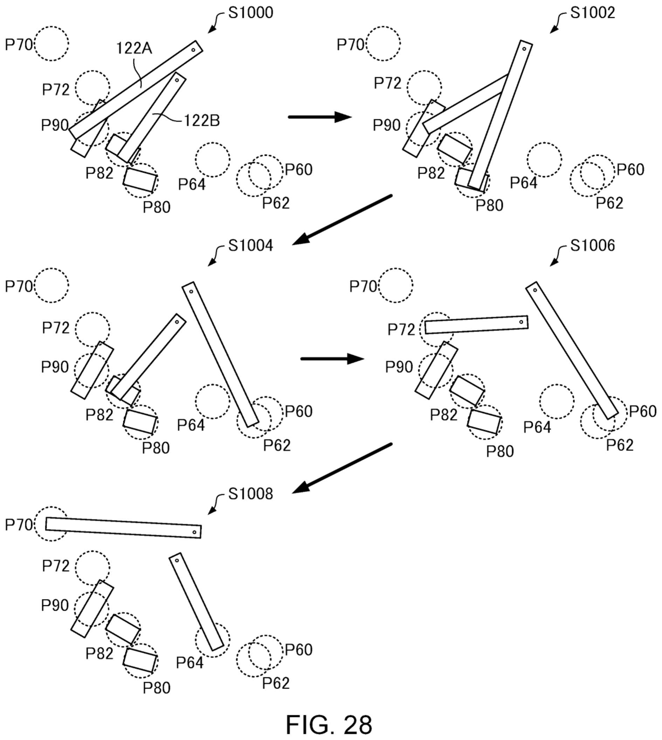

FIG. 27 is a flowchart illustrating an example of adjustment processing for the first reagent probe 120A and the second reagent probe 120B. Note that, in FIG. 27, the first reagent probe 120A is represented by "Probe A" and the second reagent probe 120B is represented by "Probe B." FIG. 28 is a diagram for describing the operation of the first reagent dispensing mechanism 12.

First, the control unit 40 performs processing of adjusting the height of the first reagent probe 120A with respect to the reaction container 26 and processing of retracting the second reagent probe 120B in parallel (step S1000). The control unit 40 moves the first reagent probe 120A to the third height adjustment position P90 and adjusts the height of the first reagent probe 120A with respect to the dilution container 23 using the third height adjustment member 36C. Moreover, the control unit 40 moves the second reagent probe 120B to a position where the first reagent arm 122A and the second reagent arm 122B do not interfere with each other. At this time, the height of the second reagent arm 122B may be lower than the height of the first reagent arm 122A. Note that the position to which the second reagent probe 120B is retracted is not particularly limited as long as it is a position where the first reagent arm 122A does not interfere with the second reagent arm 122B.

Next, the control unit 40 performs processing for adjusting the position of the first reagent probe 120A with respect to the first reagent probe cleaning mechanism 33A and processing of adjusting the height of the second reagent probe 120B with respect to the reaction container 26 in parallel (step S1002). The control unit 40 moves the first reagent probe 120A from the third height adjustment position P90 to the third cleaning position P80 and adjusts the position of the first reagent probe 120A with respect to the first reagent probe cleaning mechanism 33A. Moreover, the control unit 40 moves the second reagent probe 120B to the third height adjustment position P90 and adjusts the height of the second reagent probe 120B with respect to the reaction container 26 using the third height adjustment member 36C.

Next, the control unit 40 performs processing of adjusting the position of the first reagent probe 120A with respect to the first reagent container 24 on the second line 4Ab and processing of adjusting the position of the second reagent probe 120B with respect to the second reagent probe cleaning mechanism 33B in parallel (step S1004). The control unit 40 moves the first reagent probe 120A from the third cleaning position P80 to the second jig adjustment position P62 on the second line 4Ab and adjusts the position of the first reagent probe 120A with respect to the jig disposed on the second line 4Ab. Further, the control unit 40 moves the second reagent probe 120B from the third height adjustment position P90 to the fourth cleaning position P82 and adjusts the position of the second reagent probe 120B with respect to the second reagent probe cleaning mechanism 33B.

Next, the control unit 40 performs processing of adjusting the position of the first reagent probe 120A with respect to the first reagent container 24 on the first line 4Aa and processing of adjusting the dispensing position of the second reagent probe 120B with respect to the reaction container 26 in parallel (step S1006). The control unit 40 moves the first reagent probe 120A from the second jig adjustment position P62 on the second line 4Ab to the first jig adjustment position P60 on the first line 4Aa and adjusts the position of the first reagent probe 120A with respect to the jig on the first line 4Aa. Moreover, the control unit 40 moves the second reagent probe 120B from the fourth cleaning position P82 to the fourth dispensing adjustment position P72 and adjusts the dispensing position of the second reagent probe 120B with respect to the reaction container 26.

Next, the control unit 40 performs processing of adjusting the dispensing position of the first reagent probe 120A with respect to the reaction container 26 and processing of adjusting the position of the second reagent probe 120B with respect to the first reagent container 24 on the third line 4B in parallel (step S1008). The control unit 40 moves the first reagent probe 120A from the first jig adjustment position P60 to the third dispensing adjustment position P70 on the first line 4Aa and adjusts the dispensing position of the first reagent probe 120A with respect to the reaction container 26. Moreover, the control unit 40 moves the second reagent probe 120B from the fourth dispensing adjustment position P72 to the third jig adjustment position P64 on the third line 4B and adjusts the position of the second reagent probe 120B with respect to the jig on the third line 4B.

After the processing in step S 1008, the control unit 40 terminates the adjustment processing for the first reagent probe 120A and the second reagent probe 120B.

### 3.7. Modified Examples of Adjustment Processing for Reagent Probe of First Reagent Dispensing Mechanism

Next, modified examples of the above-described adjustment processing for the first reagent probe 120A and the second reagent probe 120B illustrated in FIG. 27 will be described. Hereinafter, differences from the aforementioned example of the adjustment processing illustrated in FIG. 27 will be described, and description of similar points will be omitted.

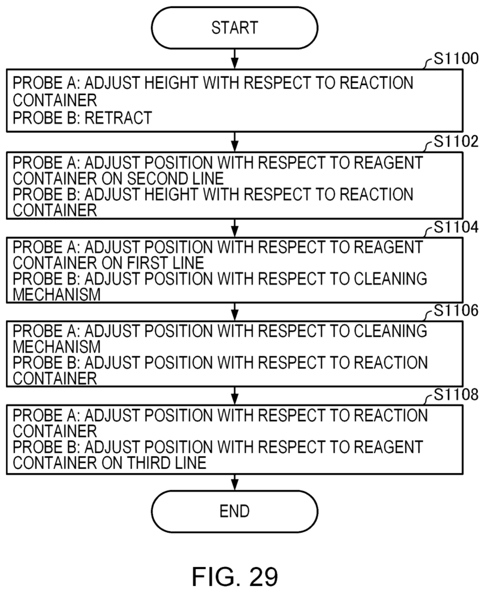

FIG. 29 is a flowchart illustrating a modified example of the adjustment processing for the first reagent probe 120A and the second reagent probe 120B.

First, the control unit 40 performs processing of adjusting the height of the first reagent probe 120A with respect to the reaction container 26 and processing of retracting the second reagent probe 120B in parallel (step S1100).

Next, the control unit 40 performs processing of adjusting the position of the first reagent probe 120A with respect to the first reagent container 24 on the second line 4Ab and processing of adjusting the height of the second reagent probe 120B with respect to the reaction container 26 in parallel (step S1102).

Next, the control unit 40 performs processing of adjusting the position of the first reagent probe 120A with respect to the first reagent container 24 on the first line 4Aa and processing of adjusting the position of the second reagent probe 120B with respect to the second reagent probe cleaning mechanism 33B in parallel (step S1104).

Next, the control unit 40 performs processing of adjusting the position of the first reagent probe 120A with respect to the first reagent probe cleaning mechanism 33A and processing of adjusting the position of the second reagent probe 120B with respect to the reaction container 26 in parallel (step S1106).

Next, the control unit 40 performs processing of adjusting the position of the first reagent probe 120A with respect to the reaction container 26 and processing of adjusting the position of the second reagent probe 120B with respect to the first reagent container 24 on the third line 4B in parallel (step S1108). After the processing in step S1108, the control unit 40 terminates the adjustment processing for the first reagent probe 120A and the second reagent probe 120B.

### 3.8. Adjustment Operation for Reagent Probe of Second Reagent Dispensing Mechanism

As described above, the configuration of the second reagent dispensing mechanism 13 is the same as that of the first reagent dispensing mechanism 12, and the adjustment operation and adjustment processing for the reagent probe of the second reagent dispensing mechanism 13 are performed similarly to the above-described adjustment operation and adjustment processing for the first reagent dispensing mechanism 12. Therefore, the adjustment operation and adjustment processing for the second reagent dispensing mechanism 13 will be omitted.

### 3.9. Effects

In the automated analyzer 300, the reaction turntable 6 includes the first line 6A and the second line 6B, the diluted specimen dispensing mechanism 8 includes the first diluted specimen probe 80A (an example of a first probe) that dispenses diluted specimen to a reaction container 26 disposed on the first line 6A, the first diluted specimen arm 82A (an example of a first arm) that supports the first diluted specimen probe 80A, a second diluted specimen probe 80B (an example of a second probe) that dispenses diluted specimen to a reaction container 26 disposed on the second line 6B, and the second diluted specimen arm 82B (an example of a second arm) that supports the second diluted specimen probe 80B. Accordingly, in the automated analyzer 300, since the reaction turntable 6 includes the first line 6A and the second line 6B, a specimen can be measured efficiently.

The automated analyzer 300 includes the first diluted specimen probe cleaning mechanism 32A for cleaning the first diluted specimen probe 80A, and the second diluted specimen probe cleaning mechanism 32B for cleaning the second diluted specimen probe 80B. Further, the control unit 40 performs processing (an example of first processing) of adjusting the dispensing position of the first diluted specimen probe 80A with respect to the reaction containers 26 disposed on the first line 6A, processing (an example of second processing) of adjusting the dispensing position of the second diluted specimen probe 80B with respect to the reaction containers 26 disposed on the second line 6B, processing (an example of third processing) of adjusting the position of the first diluted specimen probe 80A with respect to the first diluted specimen probe cleaning mechanism 32A, and processing (an example of fourth processing) of adjusting the position of the second diluted specimen probe 80B with respect to the second diluted specimen probe cleaning mechanism 32B.

Further, the operating range of the first diluted specimen arm 82A in the processing of adjusting the dispensing position of the first diluted specimen probe 80A with respect to the reaction container 26 overlaps with the operating range of the second diluted specimen arm 82B in the processing of adjusting the dispensing position of the second diluted specimen probe 80B with respect to the reaction container 26. Further, the operating range of the first diluted specimen arm 82A in the processing of adjusting the dispensing position of the first diluted specimen probe 80A with respect to the reaction container 26 does not overlap with the operating range of the second diluted specimen arm 82B in the processing of adjusting the position of the second diluted specimen probe 80B with respect to the second diluted specimen probe cleaning mechanism 32B.

The control unit 40 performs the processing of adjusting the dispensing position of the first diluted specimen probe 80A with respect to the reaction container 26 and the processing of adjusting the position of the second diluted specimen probe 80B with respect to the second diluted specimen probe cleaning mechanism 32B in parallel, and does not perform the processing of adjusting the dispensing position of the first diluted specimen probe 80A with respect to the reaction container 26 and the processing of adjusting the dispensing position of the second diluted specimen probe 80B with respect to the reaction container 26 in parallel.

Accordingly, in the automated analyzer 300, adjustment processing in which the operating ranges of the arms overlap is not performed in parallel, and processing in which the operating ranges of the arms do not overlap is performed in parallel, and thus the time required for the adjustment processing can be reduced.

Note that the embodiments and the modified examples described above are merely examples, and the invention is not limited thereto. For example, the respective embodiments and modified examples may be appropriately combined.

The invention is not limited to the above-described embodiments, and various modifications can be made. For example, the invention includes configurations that are substantially the same as the configurations described in the embodiments. Substantially same configurations mean configurations having the same functions and methods, for example. The invention also includes configurations obtained by replacing non-essential elements of the configurations described in the embodiments with other elements. The invention further includes configurations obtained by adding known art to the configurations described in the embodiments.

## Claims

1. An automated analyzer comprising:
a turntable on which a plurality of containers are arranged;
a dispensing mechanism that dispenses or sucks liquid to or from one of the containers disposed at a first position on the turntable; and
a control unit that controls the dispensing mechanism,
wherein the dispensing mechanism includes:
a probe;
a drive mechanism that moves the probe in a horizontal direction;
a first sensor that detects a contact of the probe with a liquid surface; and
a second sensor that detects a collision of the probe,
wherein the probe dispenses or sucks liquid to or from one of the containers disposed at the first position when the probe has stopped at a second position, and
wherein the control unit performs:
processing of disposing a target container among the containers containing a liquid for detection at the first position;
processing of performing a first scan of repeating processing of moving the probe in a horizontal direction to change a stop position of the probe and processing of acquiring a detection result of the first sensor and a detection result of the second sensor at the changed stop position; and
processing of correcting the second position based on a result of the first scan.

2. The automated analyzer according to claim 1, wherein
the control unit changes a stop position of the probe at a first interval in the processing of performing the first scan,
the control unit, after the processing of performing the first scan, performs processing of performing a second scan of repeating processing of moving the probe in a horizontal direction to change a stop position of the probe at a second interval which is less than the first interval, and processing of acquiring a detection result of the first sensor and a detection result of the second sensor at the changed stop position, and
the control unit, in the processing of correcting the second position, determines a position at which the second scan is started based on the result of the first scan, and corrects the second position based on a result of the second scan.

3. The automated analyzer according to claim 1 or 2,
wherein the control unit, in the processing of correcting the second position, corrects the second position based on a stop position of the probe at which a detection result that the first sensor detects a liquid surface and the second sensor does not detect a collision is obtained.

4. The automated analyzer according to claim 1 or 2,
wherein, in the processing of correcting the second position, when the probe has consecutively stopped at a plurality of stop positions at which a detection result that the first sensor detects a liquid surface and the second sensor does not detect a collision is obtained, the control unit corrects the second position based on a center of a range of the consecutive stop positions.

5. The automated analyzer according to claim 1 or 2, wherein
when the probe has consecutively stopped at a plurality of stop positions at which a detection result that the first sensor detects a liquid surface and the second sensor does not detect a collision is obtained, the control unit performs processing of determining whether or not a range of the consecutive stop positions is equal to or greater than a threshold value,
when the range of the consecutive stop positions has not been determined to be equal to or greater than the threshold value, the control unit performs processing of rotating the turntable to change the first position, and
when the range of the consecutive stop positions has been determined to be equal to or greater than the threshold value, the control unit performs processing of correcting the second position.

6. The automated analyzer according to claim 1 or 2, wherein
the turntable includes a first line and a second line, and
the dispensing mechanism includes:
a first probe that dispenses or sucks liquid to or from one of the containers held on the first line;
a first arm that supports the first probe;
a second probe that dispenses or sucks liquid to or from one of the containers held on the second line; and
a second arm that supports the second probe.

7. The automated analyzer according to claim 6, further comprising:
a first probe cleaning mechanism for cleaning the first probe; and
a second probe cleaning mechanism for cleaning the second probe,
wherein the control unit performs:
first processing of adjusting a position of the first probe with respect to one of the containers disposed on the first line;
second processing of adjusting a position of the second probe with respect to one of the containers disposed on the second line;
third processing of adjusting a position of the first probe with respect to the first probe cleaning mechanism; and
fourth processing of adjusting a position of the second probe with respect to the second probe cleaning mechanism,
wherein an operating range of the first arm in the first processing overlaps with an operating range of the second arm in the second processing,
wherein the operating range of the first arm in the first processing does not overlap with an operating range of the second arm in the fourth processing, and
wherein the control unit perform the first processing and the fourth processing in parallel, and does not perform the first processing and the second processing in parallel.

8. A method of adjusting a stop position of a probe in an automated analyzer including:
a turntable on which a plurality of containers are arranged; and
a dispensing mechanism that dispenses or sucks liquid to or from one of the containers disposed at a first position on the turntable,
the dispensing mechanism including:
the probe;
a drive mechanism that moves the probe in a horizontal direction;
a first sensor that detects a contact of the probe with a liquid surface; and
a second sensor that detects a collision of the probe,
the probe dispensing or sucking liquid to or from one of the containers disposed at the first position when the probe has stopped at a second position,
the method comprising:
disposing a target container among the containers containing a liquid for detection at the first position;
performing a first scan of repeating a process of moving the probe in a horizontal direction to change a stop position of the probe, and a process of acquiring a detection result of the first sensor and a detection result of the second sensor at the changed stop position; and
correcting the second position based on a result of the first scan.
